# EUROPÄISCHE PATENTANMELDUNG

(11) **EP 4 516 766 A1**
(43) Veröffentlichungstag der Anmeldung: **05.03.2025**
(21) Anmeldenummer: 23194896.9
(22) Anmeldetag: 01.09.2023
(51) Int. Cl.: C05D 1/00, A01C 21/00, A01C 23/04, A01G 31/00, C05D 5/00, C05D 9/02, C05F 11/08, C05G 5/10, C05G 5/20

(54) **NÄHRSTOFFLÖSUNGEN**

(71) Anmelder: suiteg GmbH, 50858 Köln (DE)
(72) Erfinder: BAUER, Kornelia, 50858 Köln (DE)
(74) Vertreter: Kutzenberger Wolff & Partner

(57) **Zusammenfassung**

Die Erfindung betrifft eine Nährstoffkombination für die erdelose Kultur von Pflanzen, insbesondere bei vertikaler Landwirtschaft über wenigstens zwei Ebenen, vorzugsweise wenigstens drei Ebenen, umfassend zumindest: Stickstoff, Phosphor, Kalium, Schwefel, Calcium, Magnesium, Bor, Molybdän, Kupfer, Mangan, Eisen, und Zink; ggfs. Mikroorganismen und/oder Mikroben-basierte Präparate, und ggfs. Fermente; wobei das Verhältnis von Stickstoff zu Kalium mindestens 1,0 : 2,0 beträgt. Außerdem betrifft die Erfindung eine Nährstofflösung, welche eine solche Nährstoffkombination und Wasser umfasst, und ein Verfahren für die erdelose Kultur von Pflanzen.

## Beschreibung

Die Erfindung betrifft eine Nährstoffkombination für die erdelose Kultur von Pflanzen, insbesondere bei vertikaler Landwirtschaft über wenigstens zwei Ebenen, vorzugsweise wenigstens drei Ebenen, umfassend zumindest: Stickstoff, Phosphor, Kalium, Schwefel, Calcium, Magnesium, Bor, Molybdän, Kupfer, Mangan, Eisen, und Zink; ggfs. Mikroorganismen und/oder Mikroben-basierte Präparate, und ggfs. Fermente; wobei das Verhältnis von Stickstoff zu Kalium mindestens 1,0 : 2,0 beträgt. Außerdem betrifft die Erfindung eine Nährstofflösung, welche eine solche Nährstoffkombination und Wasser umfasst, und ein Verfahren für die erdelose Kultur von Pflanzen.

Die kommerzielle Erzeugung von Pflanzen und Pflanzenmaterial für den Verbrauch ist mit vielen Schwierigkeiten verbunden, die mit den natürlichen botanischen Eigenschaften und der Umgebung, in welcher die Pflanzen angebaut werden, zusammenhängen. Um eine wirtschaftlich tragfähige Produktion zu gewährleisten, sind geeignete Verfahren erforderlich, die diese Schwierigkeiten minimieren und das Wachstum und die Produktion der Pflanzen maximieren.

Kommerzielle Betriebe haben sich so entwickelt, dass sie Pflanzen in organisierten Reihen anbauen. Die Reihen erleichtern das Pflanzen, Ernähren, Beschneiden, Bewässern, Pflegen und Ernten der Pflanzen oder der von den Pflanzen erzeugten Lebensmittelprodukte. Bei konventionellen Anbaumethoden werden häufig Bewässerungstechniken mit Überschwemmungen und das massenhafte Versprühen von Chemikalien zur Begasung und Düngung eingesetzt.

Überschwemmungsbewässerung und Massensprühen sind nicht nur eine Verschwendung von Wasser und chemischen Ressourcen, sondern können auch die Oberflächenböden sowie Grund- und Oberflächenwasserquellen schädigen. Die Bewässerung von Feldern mit Flutwasser fördert die Erosion und den Abfluss von Düngemitteln und Pestiziden in Wasserquellen. In trockenen Gebieten führt die Bewässerung durch Überschwemmungen häufig zu einer Mineralisierung des Bodens, die mit der Anreicherung von Oberflächensalzen einhergeht. Überschwemmungsbewässerung führt auch zu starken Schwankungen der Bodenfeuchtigkeit, was für die Pflanzen eine Belastung darstellt.

Der hydroponische Anbau wurde bisher für den Anbau von Gemüse, Blumen und anderen einjährigen Pflanzen, die kein großes Wurzelsystem entwickeln, praktiziert. Hydroponik ist eine Untergruppe der Hydrokultur, bei der Pflanzen in einer nährstoffreichen Lösung auf Wasserbasis kultiviert werden. Bei der Hydrokultur wird keine Erde verwendet, sondern das Wurzelsystem wird durch ein inertes Medium unterstützt. Das Grundprinzip der Hydroponik besteht darin, dass die Pflanzenwurzeln in direkten Kontakt mit der Nährlösung kommen und gleichzeitig Zugang zu Sauerstoff haben, der für ein gutes Wachstum unerlässlich ist. Im Gegensatz zum Freilandanbau werden Pflanzen üblicherweise in einem Gewächshaus oder in einer geschlossenen Umgebung auf inerten Medien hydroponisch angebaut.

Für ein gesundes und schnelles Wachstum, insbesondere in einer hydroponischen Umgebung, benötigen die Pflanzen ein ausgewogenes Angebot löslicher Nährstoffe. Flüssigdünger enthalten in der Regel die wichtigsten Makronährstoffe Stickstoff, Phosphor und Kalium sowie die Mikronährstoffe Eisen, Mangan, Zink, Kupfer, Bor und Molybdän, wobei die Spurenelemente Calcium, Magnesium und Schwefel häufig fehlen. Bei der Verwendung von Düngern dieser Art kann es zu unausgewogenem Wachstum und Nährstoffmangel bei den Pflanzen kommen. Unzureichende oder übermäßige Mengen eines Nährstoffs können zu schlechten Ernteergebnissen führen. Überschüssige Mengen können besonders problematisch sein, da sie die Kulturpflanzen schädigen können, Geld und Düngerressourcen verschwenden und die Umwelt verschmutzen, wenn Dünger beim Spülen des Nährstoffzufuhrsystems freigesetzt wird.

Das richtige Timing der Nährstoffgabe berücksichtigt das Wachstumsmuster der Pflanze und damit die natürlichen Veränderungen des Nährstoffbedarfs während der Saison. Die Entwicklung der Pflanzen durchläuft verschiedene Phasen. Es ist wichtig, Veränderungen im Wachstum und im Nährstoffbedarf zu antizipieren, damit die Düngung zeitlich auf die Bedürfnisse des Wachstums abgestimmt werden kann.

Verschiedene Nährstoffzusammensetzungen zur (erdelosen) Kultur von Pflanzen sind aus dem Stand der Technik bekannt.

CN 106 431 610 A betrifft eine biologische organische Nährlösung, die mit vier Effekten, d.h. schnellem Effekt, Langzeiteffekt, Spezialeffekt und Synergismus, integriert ist und es der Kombination von Mikroorganismen und der organischen Nährlösung ermöglichen kann, eine bessere Wirkung auszuüben. Die Nährlösung wird aus den folgenden Stoffen in Gewichtsteilen hergestellt: 300 bis 350 Teile Wasser, 100 bis 140 Teile Kaliumnitrat, 80 bis 100 Teile Ammoniumsulfat, 140 bis 180 Teile Monokaliumphosphat, 25 bis 30 Teile Magnesiumsulfat, 20 bis 30 Teile Calciumnitrat, 160 bis 180 Teile Aminosäure, 120 bis 140 Teile Fulvosäuren, 2 bis 3 Teile Zinksulfat, 2 bis 3 Teile Mangansulfat, 3 bis 4 Teile Borsäure, 1 bis 2 Teile Natriumselenit, 3 bis 6 Teile Natriumpolyasparaginsäure, 5 bis 8 Teile Aminooligosaccharin, 1 bis 2 Teile Bacillus subtilis, 1 bis 2 Teile PGPR-Probiotika und 2 bis 3 Teile EM-Probiotika.

CN 108 558 494 A betrifft eine Anbautechnik für organischen Mais mit einer Mikroelement- und Probiotika-Nährstoffmischung und selenreichem Zink, die dadurch gekennzeichnet ist, dass sie Nährstoffkomponenten, Spurenelementkomponenten und probiotische Komponenten enthält, wobei die Nährstoffkomponenten aus Harnstoff, PzOs und K₂O bestehen; die Spurenelementkomponenten aus Selen, Zink, Schwefel, Bor, Eisen, Mangan, Kupfer, Molybdän, Calcium und Magnesium bestehen; die probiotischen Komponenten aus einer oder mehreren Kombinationen von Aminosäuren, Fulvosäuren, Huminsäure, Alginsäure und Superoxiddismutase bestehen. Der hohe Gehalt an organischem Selen, Zink, Calcium, Magnesium und anderen Elementen im Mais deckt den Bedarf des menschlichen Körpers, verbessert die Immunität, beugt Krebs vor und erhöht die Widerstandsfähigkeit der Pflanzen gegen Trockenheit und Schädlingsbefall.

US 2009 0229331 A1 betrifft eine konzentrierte, homogene, stabile, wasserlösliche Düngemittelsuspension, umfassend: wasserlösliche mineralische Nährstoffe von mindestens Stickstoff, Phosphor, Kalium, Calcium und Magnesium; und ein organisches stabilisierendes Additiv; und wobei die gießbare, wässrige Suspension wasserlösliche mineralische Nährstoffe in einer Menge von mindestens etwa 80 Gewichtsprozent (Gew.-%) der Suspension aufweist.

US 2015 075239 A1 betrifft Bodenverbesserungs-/Blattnährstoffzusammensetzungen und Verfahren zu ihrer Herstellung und Verwendung. Bei den Zusammensetzungen handelt es sich um wässrige Zusammensetzungen, die eine Kohlenstoffskelett-Energiekomponente (CSE), einen Makronährstoff, einen Vitamin-Cofaktor, einen Komplexbildner und mindestens eine exotische Mikronährstoffkomponente und eine Ionophor-Komponente enthalten.

US 2016 221886 A1 betrifft ein Verfahren zum hydroponischen Züchten von Pflanzen, umfassend das hydroponische Züchten der Pflanzen in Gegenwart einer hydroponischen Düngemittelzusammensetzung mit kontrollierter Freisetzung. Die hydroponische Düngemittelzusammensetzung umfasst eine polymerbeschichtete Düngemittelformulierung mit kontrollierter Freisetzung, wobei die beschichtete Formulierung ein N-P-K-Verhältnis aufweist, wobei das N-K-Verhältnis im Wesentlichen ausgeglichen ist, und ferner Mikronährstoffe und optional chelatiertes Eisen umfasst.

US 2020 154652 A1 offenbart Nährstoffzusammensetzungen für das Pflanzenwachstum. Eine Nährstoffzusammensetzung enthält primäre Makronährstoffe, einschließlich Stickstoff, Phosphor und Kalium, sekundäre Makronährstoffe, einschließlich Calcium und Schwefel. Eine Nährstoffzusammensetzung kann Mikronährstoffe und zusätzliche sekundäre Makronährstoffe, wie Magnesium, enthalten. Nährstoffzusammensetzungen, die solche Nährstoffquellen enthalten, weisen ein vorteilhaftes Pflanzenwachstum auf. Hydroponische Nährstoffzusammensetzung, wasserlösliches Pulver und Pflanzenwachstumsmedien, die die Nährstoffzusammensetzung enthalten, sowie Verfahren zur Verwendung der Nährstoffzusammensetzungen werden ebenfalls offenbart.

WO 2016 103162 A2 offenbart ein Verfahren zur Behandlung einer Pflanze, das das Inkontaktbringen einer Düngemittelzusammensetzung mit dem Boden in der Nähe der Pflanze umfasst, wobei die Pflanze eine oder mehrere der folgenden Pflanzen umfasst: eine Dattelpalme, eine Zitruspflanze, eine Feigenpflanze, eine Mangopflanze oder eine Olivenpflanze, wobei die Düngemittelzusammensetzung Stickstoff, Phosphor und Kalium (NPK) in verschiedenen Graden umfasst, einschließlich im Bereich von etwa 10-24:5-12: 10-24.

Die Nährstoffkombinationen des Standes der Technik sind jedoch nicht in jeder Hinsicht zufriedenstellend. Es besteht ein Bedarf an verbesserten Nährstoffkombinationen für die erdelose Kultur von Pflanzen, welche ein optimales Pflanzenwachstum ermöglichen und individuell an die Bedürfnisse der Pflanzen angepasst werden können.

Es ist daher eine Aufgabe der Erfindung, verbesserte Nährstoffkombinationen bereitzustellen, welche für die erdelose Kultur von Pflanzen, insbesondere bei vertikaler Landwirtschaft über wenigstens zwei Ebenen, vorzugsweise wenigstens drei Ebenen, geeignet sind.

Diese Aufgabe wird durch den Gegenstand der Patentansprüche gelöst.

Es wurde gefunden, dass die erfindungsgemäße Nährstoffkombination sich für die erdelose Kultur von Pflanzen eignet. Dabei kann die Menge an zugeführten Nährstoffen gezielt eingestellt und an die jeweiligen Bedürfnisse der Pflanze angepasst werden, welche z.B. abhängig sind von der Art der Pflanze oder der Wachstumsphase. Es wurde überraschend gefunden, dass ein Verhältnis von Stickstoff zu Kalium von mindestens 1,0 : 2,0 besonders vorteilhaft für das Wachstum verschiedener Pflanzen ist.

Es wurde gefunden, dass der Anbau in Hydrokultur viele Vorteile bietet. Hydroponische Kulturen führen im Vergleich zu anderen Wachstumssubstraten zur höchsten Biomasse- und Proteinproduktion von Pflanzen, die unter den gleichen Umweltbedingungen angebaut und mit den gleichen Nährstoffmengen versorgt werden. Dies ist durch eine sorgfältige Kontrolle der Nährstofflösung und des pH-Werts möglich. Ein hydroponisches System verbraucht weniger Wasser als Pflanzen in Erde, da das System geschlossen ist und somit weniger Verdunstung stattfindet. Hydrokulturen sind besser für die Umwelt, weil sie weniger Abfall und Verschmutzung durch Bodenabfluss verursachen. Die Hydrokultur sorgt für gesündere Pflanzen als der traditionelle Anbau in Erde, da die Zufuhr von Nährstoffen zu den Pflanzen leichter reguliert werden kann, um das Pflanzenwachstum zu optimieren.

Ein erster Aspekt der Erfindung betrifft eine Nährstoffkombination für die erdelose Kultur von Pflanzen, insbesondere bei vertikaler Landwirtschaft über wenigstens zwei Ebenen, vorzugsweise wenigstens drei Ebenen, umfassend zumindest:
- Stickstoff, in einer Menge im Bereich von 0,001 bis 15 Gew.-%;
- Phosphor, in einer Menge im Bereich von 0,01 bis 6,0 Gew.-%;
- Kalium, in einer Menge im Bereich von 1,0 bis 30 Gew.-%;
- Schwefel, in einer Menge im Bereich von 0,1 bis 10 Gew.-%;
- Calcium, in einer Menge im Bereich von 0,4 bis 10 Gew.-%;
- Magnesium, in einer Menge im Bereich von 0,04 bis 5,0 Gew.-%;
- Bor, in einer Menge im Bereich von 0,001 bis 0,05 Gew.-%;
- Molybdän, in einer Menge im Bereich von 0,0005 bis 0,05 Gew.-%;
- Kupfer, in einer Menge im Bereich von 0,0005 bis 0,05 Gew.-%;
- Mangan, in einer Menge im Bereich von 0,001 bis 0,1 Gew.-%;
- Eisen, in einer Menge im Bereich von 0,001 bis 1,0 Gew.-%; und
- Zink, in einer Menge im Bereich von 0,001 bis 0,4 Gew.-%;
jeweils bezogen auf das Gesamtgewicht der Nährstoffkombination,
ggfs. Mikroorganismen und/oder Mikroben-basierte Präparate, vorzugsweise bestehend aus Chitin oder Toxinen, ausgewählt aus der Gruppe bestehend aus *Arthrobacter globiformis, Azospilrillum brasilense, Azospilrillum lipoferum, Azotobacter chroococcum, Azotobacter paspali, Azotobacter vinelandii, Bacillus amyloliquefaciens, Bacillus atrophaeus, Bacillus licheniformis, Bacillus megaterium, Bacillus pumilus, Bacillus subtilis, Bacillus thuringiensis, Bififobacterium animalis, Bififobacterium lactis, Bififobacterium longum, Brevibacillus brevis, Cellulomonas fimi, Lactobacillus acidophilus, Lactobacillus casei, Lactobacillus lactis, Lactobacillus plantarum, Lactobacillus rhamnosus, Lactococcus lactis, Leuconostoc pseudomesenteorides, Micrococcus luteus, Phanerochaete chrysosporium, Pseudomonas aeruginosa, Pseudomonas argentinensis, Pseudomonas azotoformans, Pseudomonas chlororaphis, Pseudomonas flourescens, Pseudomonas fulva, Pseudomonas nitroreducens, Pseudomonas poae, Pseudomonas putida, Pseudomonas stutzeri, Rhodopseudomonas palustris, Rhodospirillum rubrum, Saccharomyces cervisiae, Streptococcus thermophilus, Streptomyces griseus,* und *Thrichoderma reesei;* und
ggfs. Fermente ausgewählt aus Algen, Kompost, Melasse und Mungbohnen; wobei das Verhältnis von Stickstoff zu Kalium mindestens 1,0 : 2,0 beträgt.

Die erfindungsgemäße Nährstoffkombination ist vorzugsweise ein Konzentrat oder ein Pulver mit einer verhältnismäßig hohen Konzentration an Nährstoffen, bevorzugt mit einer Konzentration an Nährstoffen von mindestens 250 000 ppm. Für die Verwendung zur Aufzucht von Pflanzen, insbesondere zur Bewässerung der Pflanzen, wird die Nährstoffkombination vorzugsweise mit Wasser zu einer Nährstofflösung verdünnt.

Die erfindungsgemäße Nährstoffkombination umfasst die Makronährstoffe Stickstoff, Phosphor und Kalium sowie die Mikronährstoffe Eisen, Mangan, Zink, Kupfer, Bor und Molybdän, und außerdem die Spurenelemente Calcium, Magnesium und Schwefel. Somit umfasst die Nährstoffkombination alle notwendigen Nährstoffe, um Pflanzen in Mischkultur kultivieren zu können. Zusätzlich können weitere Nährstoffe in der Nährstoffkombination enthalten sein.

Zum Zwecke der Beschreibung ist die *"erdelose Kultur"* ein Kulturverfahren, bei welchem die Kultur von Pflanzen unabhängig vom gewachsenen Boden erfolgt. Dabei wird die Pflanze mechanisch stabilisiert und die Pflanzen benötigen weiteres Substrat für einen stabilen Halt.

Zum Zwecke der Beschreibung ist die *"vertikale Landwirtschaft"* eine Sonderform der urbanen Landwirtschaft, bei welcher auf mehreren übereinander gelagerten Ebenen die Kultur von Pflanzen basierend auf Kreislaufwirtschaft und Hydrokulturen unter Gewächshausbedingungen erfolgt.

Sofern nicht ausdrücklich etwas anderes angegeben ist, sind alle Prozentangaben Gewichtsprozent. Sofern nicht ausdrücklich etwas anderes angegeben ist, beziehen sich alle Prozentangaben auf das Gesamtgewicht der erfindungsgemäßen Nährstoffkombination oder der erfindungsgemäßen Nährstofflösung. Sofern nicht ausdrücklich etwas anderes angegeben ist, beziehen sich alle Angaben in g pro Liter auf einen Liter der erfindungsgemäßen Nährstoffkombination oder der erfindungsgemäßen Nährstofflösung.

Bevorzugt umfasst die Nährstoffkombination Mikroorganismen und/oder Mikroben-basierte Präparate.

Bevorzugt kann dadurch eine Interaktion der Pflanzen mit den Mikroorganismen und/oder Mikroben-basierten Präparaten gezielt induziert werden und beeinflusst hierbei die Ernährung der Pflanze und pflanzeneigene Stressbewältigung positiv. Vorzugsweise können solche Mikroorganismen und/oder Mikroben-basierte Präparate den Zuwachs pflanzlicher Biomasse und Entwicklung von Blatt- und Wurzeln fördern und zugleich die pflanzliche Abwehr gegenüber biotischem und abiotischem Stress stärken. Bevorzugt können dadurch geringere Mengen an (synthetischen) Pflanzenschutzmittel, Stressregulatoren oder wachstumsfördernden Mitteln eingesetzt werden.

Bevorzugt umfasst die Nährstoffkombination eine Lösung, welche Mikroorganismen und/oder Mikroben-basierte Präparate enthält. Geeignete Lösungen, welche Mikroorganismen und/oder Mikroben-basierte Präparate enthalten, sind kommerziell erhältlich, beispielsweise unter der Bezeichnung *Rhizoferm* von Microbe Factory. Eine bevorzugte Zusammensetzung dieser Lösung ist in nachstehender Tabelle zusammengefasst:

| Nährstoff | Konzentration [g/L] |
|---|---|
| Stickstoff | 7,6 |
| Phosphor | 1,0 |
| Kalium | 1,2 |
| Schwefel | 2,7 |
| Magnesium | 0,9 |
| Kalzium | 0,48 |
| Eisen | 0,195 |
| Mangan | 0,010 |
| Bor | 0,001 |
| Zink | 0,013 |

Bevorzugte Mikroorganismen und deren Funktion sind in der nachstehenden Tabelle zusammengefasst:

| Mikroorganismus | Funktion und Eigenschaften |
|---|---|
| *Arthrobacter globiformis* | wachstumsstimulierend |
| *Azospilrillum brasilense* | Stickstoff fixierende Bakterien |
| *Azospilrillum lipoferum* | Stickstoff fixierende Bakterien |
| *Azotobacter chroococcum* | Stickstoff fixierende Bakterien |
| *Azotobacter paspali* | Stickstoff fixierende Bakterien |
| *Azotobacter vinelandii* | Stickstoff fixierende Bakterien |
| *Bacillus amyloliquefaciens* | Stickstoff fixierende Bakterien |
| *Bacillus atrophaeus* | Stickstoff fixierende Bakterien |
| *Bacillus licheniformis* | Stickstoff fixierende Bakterien |
| *Bacillus megaterium* | Stickstoff fixierende Bakterien |
| *Bacillus pumilus* | Stickstoff fixierende Bakterien |
| *Bacillus subtilis* | Stickstoff fixierende Bakterien |
| *Bififobacterium animalis* | Actinobakterien |
| *Bififobacterium lactis* | Actinobakterien |
| *Bififobacterium longum* | Actinobakterien |
| *Brevibacillus brevis* | wachstumsstimulierend |
| *Cellulomonas fimi* | Actinobakterien |
| *Kushneria marisflavi* | wachstumsstimulierend, reduziert Salzstress |
| *Lactobacillus acidophilus* | Milchsäurebakterien |
| *Lactobacillus casei* | Milchsäurebakterien |
| *Lactobacillus lactis* | Milchsäurebakterien |
| *Lactobacillus plantarum* | Milchsäurebakterien |
| *Lactobacillus rhamnosus* | Milchsäurebakterien |
| *Lactococcus lactis* | Milchsäurebakterien |
| *Leuconostoc pseudomesente-roides* | Milchsäurebakterien; Fermentierung |
| *Micrococcus luteus* | wachstumsstimulierend |
| *Phanerochaete chrysosporium* | wachstumsstimulierend |
| *Pseudomonas aeruginosa* | potenziell wachstumsstimulierend (produziert HCN) |
| *Pseudomonas argentinensis* | wachstumsstimulierend, reduziert Salzstress |
| *Pseudomonas azotoformans* | wachstumsstimulierend, reduziert Salzstress |
| *Pseudomonas chlororaphis* | Biokontrollmittel (Fungizid) |
| *Pseudomonas flourescens* | wachstumsstimulierend; Biokontrollmittel |
| *Pseudomonas fulva* | potenzielles Biokontrollmittel (Fungizid) |
| *Pseudomonas nitroreducens* | wachstumsstimulierend; Nitrat Absorption |
| *Pseudomonas poae* | Biokontrollmittel (Fungizid) |
| *Pseudomonas putida* | wachstumsstimulierend (fixiert Stickstoff) |
| *Pseudomonas stutzeri* | wachstumsstimulierend, reduziert Salzstress |
| *Rhodopseudomonas palustris* | Stickstoff- und CO2-fixierende Photosynthesebakterien |
| *Rhodospirillum rubrum* | Stickstoff- und CO2-fixierende Photosynthesebakterien |
| *Saccharomyecs cervisiae* | wachstumsstimulierend, Biokontrollmittel |
| *Streptococcus thermophilus* | Milchsäurebakterien; Fermentierung |
| *Streptomyces griseus* | wachstumsstimulierend |
| *Thrichoderma reesei* | wachstumsstimulierend |

Der Gehalt an Stickstoff, Phosphor und Kalium (NPK) kann in verschiedenen Formen angegeben werden. Zum Zwecke der Beschreibung, bezieht sich der NPK-Gehalt auf den Gewichtsprozentanteil der Nährstoffkombination. Zum Beispiel bedeutet ein NPK-Wert 10 : 5 : 10, dass 100 g dieser Nährstoffkombination 10 g Stickstoff, 5 g Phosphor und etwa 10 g Kalium enthalten.

Bevorzugt liegt das Verhältnis von Stickstoff zu Phosphor zu Kalium (N : P : K) im Bereich von 1,0 : 0,1 : 1,5 bis 1,0 : 1,0 : 8,0 liegt, bevorzugt von 1,0 : 0,2 : 2,5 bis 1,0 : 0,7 : 6,0, bevorzugter von 1,0 : 0,3 : 3,5 bis 1,0 : 0,5 : 4,5.

In bevorzugten Ausführungsformen ist die Konzentration von Kalium größer als die Konzentration von Stickstoff.

In bevorzugten Ausführungsformen ist die Konzentration von Kalium größer als die Konzentration von Phosphor.

In bevorzugten Ausführungsformen ist die Konzentration von Stickstoff größer als die Konzentration von Phosphor.

Bevorzugt beträgt das Verhältnis von Stickstoff zu Kalium mindestens 1,0 : 2,4, bevorzugt mindestens 1,0 : 2,7, bevorzugter mindestens 1,0 : 3,0, noch bevorzugter mindestens 1,0 : 3,3, am bevorzugtesten mindestens 1,0 : 3,6, und insbesondere mindestens 1,0 : 3,9.

Bevorzugt beträgt das Verhältnis von Stickstoff zu Kalium höchstens 1,0 : 10, bevorzugt höchstens 1,0 : 8,0, bevorzugter höchstens 1,0 : 7,0, noch bevorzugter höchstens 1,0 : 6,0, am bevorzugtesten höchstens 1,0 : 5,5, und insbesondere höchstens 1,0 : 5,0.

In bevorzugten Ausführungsformen umfasst die erfindungsgemäße Nährstoffkombination Natrium.

In bevorzugten Ausführungsformen umfasst die erfindungsgemäße Nährstoffkombination Chlor.

Bevorzugt umfasst die erfindungsgemäße Nährstoffkombination eine Stickstoff-Quelle ausgewählt aus der Gruppe bestehend aus Calciumnitrat, Natriumnitrat, Kaliumnitrat, Ammoniumnitrat, Monoammoniumphosphat, Diammoniumphosphat, Triammoniumphosphat, Ammoniumsulfat, Ammoniumthiosulfat, Ammoniumchlorid, Ammoniak, Calciumcyanamid, Calciumammoniumnitrat, Harnstoff, Ammoniumlignosulfonat, Ammoniumbifluorid, und Ammoniumheptamolybdat; bevorzugt Calciumnitrat.

Bevorzugt umfasst die erfindungsgemäße Nährstoffkombination eine Phosphor-Quelle ausgewählt aus der Gruppe bestehend aus Phosphorpentoxid, Phosphorsäure, Monoammoniumphosphat, Diammoniumphosphat, Triammoniumphosphat, Kaliumpyrophosphat, Natriumpyrophosphat, Kaliumphosphat, und Natriumphosphat; bevorzugt Phosphorpentoxid.

Bevorzugt umfasst die erfindungsgemäße Nährstoffkombination eine Kalium-Quelle ausgewählt aus der Gruppe bestehend aus Kaliumoxid, Kaliumchlorid, Kaliumsulfat, Kaliumcarbonat, Kaliumacetat, Kaliumcitrat, Kaliumhydroxid, Kaliummanganat, Kaliumphosphat, Kaliummolybdat, Kaliumthiosulfat, und Kaliumnitrat; bevorzugt Kaliumoxid.

Bevorzugt umfasst die erfindungsgemäße Nährstoffkombination eine Schwefel-Quelle ausgewählt aus der Gruppe bestehend aus Ammoniumsulfat, Calciumsulfat, Kaliumsulfat, Magnesiumsulfat, Schwefelsäure, Kobaltsulfat, Kupfersulfat, Eisensulfat, Schwefeltrioxid, und Schwefel; bevorzugt Schwefeltrioxid.

Bevorzugt umfasst die erfindungsgemäße Nährstoffkombination eine Calcium-Quelle ausgewählt aus der Gruppe bestehend aus Calciumnitrat, Calciumcyanamid, Calciumacetat, Calciumborat, Calciumcarbonat, Calciumchlorid, Calciumcitrat, Calciumlactat, Calciumoxid, Calciumsulfat, Calciumtartrat, Calciumammoniumnitrat, und Calciumlignosulfonat; bevorzugt Calciumoxid.

Bevorzugt umfasst die erfindungsgemäße Nährstoffkombination eine Magnesium-Quelle ausgewählt aus der Gruppe bestehend aus Magnesiumoxid, Magnesiumacetat, Magnesiumborat, Magnesiumchlorid, Magnesiumcitrat, Magnesiumnitrat, Magnesiumphosphat, und Magnesiumsulfat; bevorzugt Magnesiumoxid.

Bevorzugt umfasst die erfindungsgemäße Nährstoffkombination eine Bor-Quelle ausgewählt aus der Gruppe bestehend aus Borsäure, Calciumborat, Kaliumborhydrid, Borax, Bortrioxid, Kaliumtetraborat, Natriumborat, Natriumborhydrid, und Natriumtetraborat.

Bevorzugt umfasst die erfindungsgemäße Nährstoffkombination eine Molybdän-Quelle ausgewählt aus der Gruppe bestehend aus Molybdänsäure, Calciummolybdat, Kaliummolybdat, Natriummolybdat, und Ammoniummolybdat.

Bevorzugt umfasst die erfindungsgemäße Nährstoffkombination eine Kupfer-Quelle ausgewählt aus der Gruppe bestehend aus Kupferacetat, Kupferchlorat, Kupferchlorid, Kupfercitrat, Kupfernitrat, und Kupfersulfat.

Bevorzugt umfasst die erfindungsgemäße Nährstoffkombination eine Mangan-Quelle ausgewählt aus der Gruppe bestehend aus Manganacetat, Manganchlorid, Mangannitrat, Manganphosphat, und Mangansulfat.

Bevorzugt umfasst die erfindungsgemäße Nährstoffkombination eine Eisen-Quelle ausgewählt aus der Gruppe bestehend aus Eisenchlorid, Eisencitrat, Eisennitrat, Eisenoxid, Eisencitrat, Eisensulfat, und Eisensulfonat.

Bevorzugt umfasst die erfindungsgemäße Nährstoffkombination eine Zink-Quelle ausgewählt aus der Gruppe bestehend aus Zinkoxid, Zinkacetat, Zinkchlorid, Zinkcitrat, Zinknitrat, und Zinksulfat.

In bevorzugten Ausführungsformen ist die erfindungsgemäße Nährstoffkombination fest, vorzugsweise ein Pulver.

In anderen bevorzugten Ausführungsformen ist die erfindungsgemäße Nährstoffkombination flüssig.

Bevorzugt umfasst die erfindungsgemäße Nährstoffkombination Stickstoff in einer Menge von mindestens 0,2 g pro Liter der Nährstoffkombination, bevorzugt mindestens 0,4 g pro Liter, bevorzugter mindestens 0,6 g pro Liter, noch bevorzugter mindestens 0,8 g pro Liter, am bevorzugtesten mindestens 1,0 g pro Liter, und insbesondere mindestens 1,2 g pro Liter.

Bevorzugt umfasst die erfindungsgemäße Nährstoffkombination Stickstoff in einer Menge von höchstens 3,5 g pro Liter der Nährstoffkombination, bevorzugt höchstens 3,0 g pro Liter, bevorzugter höchstens 2,5 g pro Liter, noch bevorzugter höchstens 2,0 g pro Liter, am bevorzugtesten höchstens 1,6 g pro Liter, und insbesondere höchstens 1,2 g pro Liter.

Bevorzugt umfasst die erfindungsgemäße Nährstoffkombination Stickstoff in einer Menge im Bereich von 0,005 bis 8,0 g pro Liter der Nährstoffkombination, bevorzugt im Bereich von 0,01 bis 6,0 g pro Liter, bevorzugter im Bereich von 0,015 bis 4,0 g pro Liter, noch bevorzugter im Bereich von 0,2 bis 2,0 g pro Liter, am bevorzugtesten im Bereich von 0,6 bis 1,5 g pro Liter, und insbesondere im Bereich von 1,0 bis 1,25 g pro Liter.

Bevorzugt umfasst die erfindungsgemäße Nährstoffkombination Phosphor in einer Menge von mindestens 0,4 g pro Liter der Nährstoffkombination, bevorzugt mindestens 0,5 g pro Liter, bevorzugter mindestens 0,6 g pro Liter, noch bevorzugter mindestens 0,7 g pro Liter, am bevorzugtesten mindestens 0,8 g pro Liter, und insbesondere mindestens 0,9 g pro Liter.

Bevorzugt umfasst die erfindungsgemäße Nährstoffkombination Phosphor in einer Menge von höchstens 3,0 g pro Liter der Nährstoffkombination, bevorzugt höchstens 2,5 g pro Liter, bevorzugter höchstens 2,0 g pro Liter, noch bevorzugter höchstens 1,5 g pro Liter, am bevorzugtesten höchstens 1,0 g pro Liter, und insbesondere höchstens 0,8 g pro Liter.

Bevorzugt umfasst die erfindungsgemäße Nährstoffkombination Phosphor in einer Menge im Bereich von 0,05 bis 5,0 g pro Liter der Nährstoffkombination, bevorzugt im Bereich von 0,1 bis 2,5 g pro Liter, bevorzugter im Bereich von 0,2 bis 1,8 g pro Liter, noch bevorzugter im Bereich von 0,3 bis 1,4 g pro Liter, am bevorzugtesten im Bereich von 0,4 bis 1,2 g pro Liter, und insbesondere im Bereich von 0,5 bis 1,0 g pro Liter.

Bevorzugt umfasst die erfindungsgemäße Nährstoffkombination Kalium in einer Menge von mindestens 2,5 g pro Liter der Nährstoffkombination, bevorzugt mindestens 3,0 g pro Liter, bevorzugter mindestens 3,5 g pro Liter, noch bevorzugter mindestens 4,0 g pro Liter, am bevorzugtesten mindestens 4,5 g pro Liter, und insbesondere mindestens 5,0 g pro Liter.

Bevorzugt umfasst die erfindungsgemäße Nährstoffkombination Kalium in einer Menge von höchstens 8,5 g pro Liter der Nährstoffkombination, bevorzugt höchstens 8,0 g pro Liter, bevorzugter höchstens 7,5 g pro Liter, noch bevorzugter höchstens 7,0 g pro Liter, am bevorzugtesten höchstens 6,5 g pro Liter, und insbesondere höchstens 6,0 g pro Liter.

Bevorzugt umfasst die erfindungsgemäße Nährstoffkombination Kalium in einer Menge im Bereich von 2,0 bis 8,5 g pro Liter der Nährstoffkombination, bevorzugt im Bereich von 2,5 bis 8,0 g pro Liter, bevorzugter im Bereich von 3,0 bis 7,5 g pro Liter, noch bevorzugter im Bereich von 3,5 bis 7,0 g pro Liter, am bevorzugtesten im Bereich von 4,0 bis 6,5 g pro Liter, und insbesondere im Bereich von 4,5 bis 6,0 g pro Liter.

Bevorzugt umfasst die erfindungsgemäße Nährstoffkombination Schwefel in einer Menge im Bereich von 0,2 bis 5,0 g pro Liter der Nährstoffkombination, bevorzugt im Bereich von 0,4 bis 3,0 g pro Liter, bevorzugter im Bereich von 0,6 bis 2,5 g pro Liter, noch bevorzugter im Bereich von 0,8 bis 2,0 g pro Liter, am bevorzugtesten im Bereich von 1,0 bis 1,5 g pro Liter, und insbesondere im Bereich von 1,2 bis 1,3 g pro Liter.

Bevorzugt umfasst die erfindungsgemäße Nährstoffkombination Calcium in einer Menge im Bereich von 0,5 bis 9,5 g pro Liter der Nährstoffkombination, bevorzugt im Bereich von 1,0 bis 9,0 g pro Liter, bevorzugter im Bereich von 2,0 bis 8,5 g pro Liter, noch bevorzugter im Bereich von 3,0 bis 8,0 g pro Liter, am bevorzugtesten im Bereich von 4,0 bis 7,5 g pro Liter, und insbesondere im Bereich von 5,0 bis 7,0 g pro Liter.

Bevorzugt umfasst die erfindungsgemäße Nährstoffkombination Magnesium in einer Menge im Bereich von 0,05 bis 4,0 g pro Liter der Nährstoffkombination, bevorzugt im Bereich von 0,1 bis 3,0 g pro Liter, bevorzugter im Bereich von 0,2 bis 2,5 g pro Liter, noch bevorzugter im Bereich von 0,4 bis 2,0 g pro Liter, am bevorzugtesten im Bereich von 0,6 bis 1,5 g pro Liter, und insbesondere im Bereich von 0,8 bis 1,0 g pro Liter.

Bevorzugt umfasst die erfindungsgemäße Nährstoffkombination Bor in einer Menge im Bereich von 0,002 bis 0,035 g pro Liter der Nährstoffkombination, bevorzugt im Bereich von 0,003 bis 0,03 g pro Liter, bevorzugter im Bereich von 0,004 bis 0,025 g pro Liter, noch bevorzugter im Bereich von 0,005 bis 0,02 g pro Liter, am bevorzugtesten im Bereich von 0,006 bis 0,015 g pro Liter, und insbesondere im Bereich von 0,007 bis 0,009 g pro Liter.

Bevorzugt umfasst die erfindungsgemäße Nährstoffkombination Molybdän in einer Menge im Bereich von 0,001 bis 0,002 g pro Liter der Nährstoffkombination.

Bevorzugt umfasst die erfindungsgemäße Nährstoffkombination Kupfer in einer Menge im Bereich von 0,001 bis 0,002 g pro Liter der Nährstoffkombination.

Bevorzugt umfasst die erfindungsgemäße Nährstoffkombination Mangan in einer Menge im Bereich von 0,002 bis 0,05 g pro Liter der Nährstoffkombination, bevorzugt im Bereich von 0,003 bis 0,04 g pro Liter, bevorzugter im Bereich von 0,004 bis 0,03 g pro Liter, noch bevorzugter im Bereich von 0,005 bis 0,025 g pro Liter, am bevorzugtesten im Bereich von 0,006 bis 0,02 g pro Liter, und insbesondere im Bereich von 0,007 bis 0,016 g pro Liter.

Bevorzugt umfasst die erfindungsgemäße Nährstoffkombination Eisen in einer Menge im Bereich von 0,002 bis 0,5 g pro Liter der Nährstoffkombination, bevorzugt im Bereich von 0,005 bis 0,3 g pro Liter, bevorzugter im Bereich von 0,01 bis 0,2 g pro Liter, noch bevorzugter im Bereich von 0,02 bis 0,15 g pro Liter, am bevorzugtesten im Bereich von 0,03 bis 0,12 g pro Liter, und insbesondere im Bereich von 0,04 bis 0,09 g pro Liter.

Bevorzugt umfasst die erfindungsgemäße Nährstoffkombination Zink in einer Menge im Bereich von 0,002 bis 0,2 g pro Liter der Nährstoffkombination, bevorzugt im Bereich von 0,005 bis 0,16 g pro Liter, bevorzugter im Bereich von 0,01 bis 0,12 g pro Liter, noch bevorzugter im Bereich von 0,007 bis 0,08 g pro Liter, am bevorzugtesten im Bereich von 0,008 bis 0,04 g pro Liter, und insbesondere im Bereich von 0,009 bis 0,02 g pro Liter.

In bevorzugten Ausführungsformen umfasst die erfindungsgemäße Nährstoffkombination
- Stickstoff, in einer Menge im Bereich von 0,001 bis 10 g;
- Phosphor, in einer Menge im Bereich von 0,01 bis 6,0 g;
- Kalium, in einer Menge im Bereich von 1,0 bis 10 g;
- Schwefel, in einer Menge im Bereich von 0,1 bis 6,0 g;
- Calcium, in einer Menge im Bereich von 0,4 bis 10 g;
- Magnesium, in einer Menge im Bereich von 0,04 bis 5,0 g;
- Bor, in einer Menge im Bereich von 0,001 bis 0,05 g;
- Molybdän, in einer Menge im Bereich von 0,0005 bis 0,05 g;
- Kupfer, in einer Menge im Bereich von 0,0005 bis 0,05 g;
- Mangan, in einer Menge im Bereich von 0,001 bis 0,1 g;
- Eisen, in einer Menge im Bereich von 0,001 bis 1,0 g; und
- Zink, in einer Menge im Bereich von 0,001 bis 0,4 g;
jeweils pro Liter der Nährstoffkombination.

In bevorzugten Ausführungsformen umfasst die erfindungsgemäße Nährstoffkombination ein erstes Nährstoffkonzentrat A und ein zweites Nährstoffkonzentrat B.

Bevorzugt umfasst das Nährstoffkonzentrat A Stickstoff, Calcium, Magnesium, Kupfer, Mangan, Eisen und/oder Zink.

Bevorzugt umfasst das Nährstoffkonzentrat B Stickstoff, Phosphor, Kalium, Schwefel, Bor und/oder Molybdän.

Bevorzugt liegen das erste Nährstoffkonzentrat A und das zweite Nährstoffkonzentrat B in einem Mengenverhältnis von 1:2 bis 2:1 vor.

Bevorzugt umfasst das erste Nährstoffkonzentrat A Stickstoff in einer Menge von mindestens 0,1 g pro Liter des ersten Nährstoffkonzentrats A, bevorzugt mindestens 0,2 g pro Liter, bevorzugter mindestens 0,4 g pro Liter, noch bevorzugter mindestens 0,6 g pro Liter, am bevorzugtesten mindestens 0,8 g pro Liter, und insbesondere mindestens 1,0 g pro Liter.

Bevorzugt umfasst das erste Nährstoffkonzentrat A Stickstoff in einer Menge von höchstens 3,5 g pro Liter des ersten Nährstoffkonzentrats A, bevorzugt höchstens 3,0 g pro Liter, bevorzugter höchstens 2,5 g pro Liter, noch bevorzugter höchstens 2,0 g pro Liter, am bevorzugtesten höchstens 1,6 g pro Liter, und insbesondere höchstens 1,2 g pro Liter.

Bevorzugt umfasst das erste Nährstoffkonzentrat A Stickstoff in einer Menge im Bereich von 0,05 bis 8,0 g pro Liter des ersten Nährstoffkonzentrats A, bevorzugt im Bereich von 0,1 bis 6,0 g pro Liter, bevorzugter im Bereich von 0,15 bis 4,0 g pro Liter, noch bevorzugter im Bereich von 0,2 bis 2,0 g pro Liter, am bevorzugtesten im Bereich von 0,6 bis 1,5 g pro Liter, und insbesondere im Bereich von 1,0 bis 1,25 g pro Liter.

Bevorzugt umfasst das erste Nährstoffkonzentrat B Stickstoff in einer Menge von mindestens 0,1 g pro Liter des ersten Nährstoffkonzentrats B, bevorzugt mindestens 0,2 g pro Liter, bevorzugter mindestens 0,4 g pro Liter, noch bevorzugter mindestens 0,6 g pro Liter, am bevorzugtesten mindestens 0,7 g pro Liter, und insbesondere mindestens 0,08 g pro Liter.

Bevorzugt umfasst das erste Nährstoffkonzentrat B Stickstoff in einer Menge von höchstens 0,5 g pro Liter des ersten Nährstoffkonzentrats B, bevorzugt höchstens 0,3 g pro Liter, bevorzugter höchstens 0,25 g pro Liter, noch bevorzugter höchstens 0,2 g pro Liter, am bevorzugtesten höchstens 0,15 g pro Liter, und insbesondere höchstens 0,09 g pro Liter.

Bevorzugt umfasst das erste Nährstoffkonzentrat B Stickstoff in einer Menge im Bereich von 0,05 bis 1,0 g pro Liter des ersten Nährstoffkonzentrats B, bevorzugt im Bereich von 0,1 bis 0,6 g pro Liter, bevorzugter im Bereich von 0,2 bis 0,4 g pro Liter, noch bevorzugter im Bereich von 0,4 bis 0,2 g pro Liter, am bevorzugtesten im Bereich von 0,6 bis 0,15 g pro Liter, und insbesondere im Bereich von 0,07 bis 0,09 g pro Liter.

Ein weiterer Aspekt der Erfindung betrifft eine Nährstofflösung umfassend die vorstehend beschriebene erfindungsgemäße Nährstoffkombination und Wasser.

Geeignete Wasserwerte für die Verwendung in der Nährstofflösung sind in nachstehender Tabelle zusammengefasst:

| Parameter | Wert | Wertebereich |
|---|---|---|
| Wasserhärte | 6 dH | 5,0 - 10,8 |
| pH-Wert | 7,6 | 6,5 - 8,2 |
| Leitfähigkeit bei 25°C | 279 µS/cm | 215 - 583 µS/cm |
| Aluminium | <0,01 | 0,005 - 0,026 |
| Ammonium | <0,5 | 0,05 - 0,5 |
| Arsen | <0,0005 | <0,0004 |
| Barium | 0,018 | |
| Beryllium | <0,001 | |
| Bismuth | <0,001 | |
| Blei | 0,0022 | <0,010 |
| Bor | 0,024 | <0,048 |
| Bromid | <0,5 | |
| Cadmium | <0,0003 | <0,0001 |
| Calcium | 36 | 30 - 58 |
| Chlorid | 15 | 12 - 78 |
| Chrom | <0,001 | <0,0005 |
| Cobalt | <0,001 | |
| Eisen | <0,005 | <0,020 |
| Fluorid | <0,15 | <0,20 |
| Gallium | <0,001 | |
| Gandolinium | <0,0001 | |
| Kalium | 1,7 | 1,4 - 4,8 |
| Kupfer | 0,5 | <0,0008 |
| Lithium | 0,0023 | |
| Magnesium | 4,3 | 3 - 12 |
| Mangan | <0,01 | <0,005 |
| Natrium | 8,3 | 5 - 39 |
| Nickel | 0,001 | <0,0006 |
| Nitrit | <0,1 | <0,03 |
| Nitrat | 10 | 10 - 19 |
| Palladium | <0,001 | |
| Phosphor (Orthophosphat) | <0,005 | |
| Phosphat | <0,015 | <0,04 |
| Quecksilber | <0,0002 | <0,00005 |
| Scandium | <0,001 | |
| Selen | <0,001 | <0,0006 |
| Silber | <0,001 | |
| Sulfat | 21 | 14 - 66 |
| Strontium | 0,073 | |
| Thallium | 0,001 | |
| Uran | 0,00012 | <0,0005 |
| Yttrium | <0,001 | |
| Zink | 0,055 | <0,0015 |

Bevorzugt weist die erfindungsgemäße Nährstofflösung eine Gesamtnährstoffkonzentration im Bereich von 1 bis 2300 ppm auf.

In bevorzugten Ausführungsformen weist die erfindungsgemäße Nährstofflösung eine Gesamtnährstoffkonzentration im Bereich von 600 bis 2300 ppm, bevorzugt von 600 bis 1300 ppm auf, bevorzugter von 700 bis 1200 ppm, und noch bevorzugter von 800 bis 1000 ppm.

In anderen bevorzugten Ausführungsformen weist die erfindungsgemäße Nährstofflösung eine Gesamtnährstoffkonzentration im Bereich von 600 bis 2300 ppm auf, bevorzugt von 1400 bis 2300 ppm, bevorzugter von 1500 bis 2100 ppm, und noch bevorzugter von 1600 bis 1900 ppm.

Bevorzugt weist die erfindungsgemäße Nährstofflösung einen pH-Wert im Bereich von 4,0 bis 8,0 auf, bevorzugt von 5,0 bis 7,0, und bevorzugter von 5,6 bis 6,0.

Ein weiterer Aspekt der Erfindung betrifft ein Verfahren für die erdelose Kultur von Pflanzen, insbesondere bei vertikaler Landwirtschaft über wenigstens zwei Ebenen, vorzugsweise wenigstens drei Ebenen, das Verfahren umfassend zumindest die Schritte:
(a) Bereitstellen von Stecklingen, Saatgut oder Pflanzgut;
(b) Bereitstellen von Substrat;
(c) Aussähen oder Stecken der gemäß Schritt (a) bereitgestellten Stecklinge, des Saatgutes oder des Pflanzgutes in das gemäß Schritt (b) bereitgestellte Substrat;
(d) Bereitstellen der vorstehend beschriebenen erfindungsgemäßen Nährstofflösung;
(e) Aufziehen der gemäß Schritt (c) ausgesäten oder gesteckten Stecklinge, des Saatguts oder des Pflanzgutes zu Sämlingen, vorzugsweise bis zum Erreichen einer Zielgröße;
   wobei Schritt (e) das Inkontaktbringen des gemäß Schritt (b) bereit gestellten Substrates und der gemäß Schritt (d) bereitgestellten Nährstofflösung umfasst;
(f) Ggf. umsetzen der gemäß Schritt (e) aufgezogenen Sämlinge; und
(g) Ggf. kultivieren der gemäß Schritt (e) aufgezogenen Sämlinge oder der gemäß Schritt (f) umgesetzten Sämlinge.

Bevorzugt sind die Pflanzen des erfindungsgemäßen Verfahrens ausgewählt aus der Gruppe bestehend aus Salaten, Kohlen, Kräutern, fruchttragendem Gemüse, insbesondere Gurke, Tomate oder Paprika, und blütenbildenden Kräutern.

Schritt (a) des erfindungsgemäßen Verfahrens umfasst das Bereitstellen von Stecklingen, Saatgut oder Pflanzgut.

Zum Zwecke der Beschreibung sind "*Stecklinge*" Pflanzenmaterialien, welche aus vegetativer Vermehrung stammen wie Abschnitte von (Mutter-)Pflanzen. "*Pflanzgut*" umfasst darüber hinaus Knollen, Wurzeln und Rhizome.

Die Menge der Stecklinge, des Saatgutes oder des Pflanzgutes ist bevorzugt abhängig von der Keimfähigkeit des Saatguts und der gewünschten Saat-/Pflanzdichte.

Schritt (b) des erfindungsgemäßen Verfahrens umfasst das Bereitstellen von Substrat.

Zum Zwecke der Beschreibung ist das "*Substrat*" die Grundlage, auf der Pflanzen gedeihen und keimen können.

Bevorzugt dient das Substrat der Pflanze als stabilisierende Matrix, in/um welche die Pflanze über z.B. die Wurzeln einen stabilen Halt generieren kann; vorzugsweise indem sie ein Wurzelgeflecht bildet und sich verankert.

Bevorzugt besitzt das Substrat die Fähigkeit, Salze der Nährstofflösung zu binden.

Bevorzugt weist das Substrat eine oder mehrere Komponenten auf, die unabhängig voneinander ausgewählt sind aus der Gruppe bestehend aus Humus, Kompost, gewachsener Gartenboden, Ackerboden, Kokosfasern, Holzfasern, Steinwolle, Holzwolle, Sphagnum-Moos, Torf-Moos, Perlite, Sand, Kies; flüssiges, halbfestes oder festes Nährmedium, vorzugsweise Agarose-Gel; und synthetischen Stoffen oder Fasern, vorzugsweise Polyvinylchlorid.

In bevorzugten Ausführungsformen umfasst Schritt (b) des erfindungsgemäßen Verfahrens das Verdichten des Substrats.

In anderen bevorzugten Ausführungsformen wird das Substrat nicht verdichtet; vorzugsweise bei bereits gefertigten Stoff-/Vliesbahnen.

In bevorzugten Ausführungsformen weist das gemäß Schritt (b) bereitgestellte Substrat die erfindungsgemäße Nährstofflösung auf.

In anderen bevorzugten Ausführungsformen weist das gemäß Schritt (b) bereitgestellte Substrat die erfindungsgemäße Nährstofflösung nicht auf, bevorzugt ist das Substrat frei von pflanzenverfügbaren Nährstoffen.

Bevorzugt weist die Nährstofflösung, welche das Substrat in Schritt (b) aufweist, eine Gesamtnährstoffkonzentration im Bereich von 1 bis 900 ppm auf.

Schritt (c) des erfindungsgemäßen Verfahrens umfasst das Aussähen oder Stecken der gemäß Schritt (a) bereitgestellten Stecklinge, des Saatgutes oder des Pflanzgutes in das gemäß Schritt (b) bereitgestellte Substrat.

Schritt (d) des erfindungsgemäßen Verfahrens umfasst das Bereitstellen der vorstehend beschriebenen erfindungsgemäßen Nährstofflösung.

Schritt (e) des erfindungsgemäßen Verfahrens umfasst das Aufziehen der gemäß Schritt (c) ausgesäten oder gesteckten Stecklinge, des Saatguts oder des Pflanzgutes zu Sämlingen, vorzugsweise bis zum Erreichen einer Zielgröße;
wobei Schritt (e) das Inkontaktbringen des gemäß Schritt (b) bereit gestellten Substrates und der gemäß Schritt (d) bereitgestellten Nährstofflösung umfasst.

Zum Zwecke der Beschreibung ist ein "*Sämling*" eine aus einem Samen durch Keimung aus dem Embryo entstandene junge Pflanze.

In bevorzugten Ausführungsformen werden die Stecklinge, das Saatgut oder das Pflanzgut ab der Aussaat oder dem Stecken abgedeckt.

Bevorzugt erfolgt das Abdecken der Stecklinge, des Saatgutes oder des Pflanzgutes für 5 bis 10 Tage, vorzugsweise für 6 bis 9 Tage, besonders bevorzugt für 7 bis 8 Tage.

In bevorzugten Ausführungsformen erfolgt in Schritt (e) eine Belichtung der Pflanzen; bevorzugt erfolgt eine Dunkelphase, wenn die Pflanzen nicht belichtet werden. Bevorzugt erfolgen Belichtungsphase und Dunkelphase im Wechsel.

Bevorzugt erfolgt in Schritt (e) die Belichtung der Pflanzen mit LED-Licht.

In bevorzugten Ausführungsformen erfolgt in Schritt (e) die Belichtung der Pflanzen mit Licht bei einer Wellenlänge von 380 bis 780 nm.

Bevorzugt erfolgt in Schritt (e) die Belichtung der Pflanzen mit rotem Licht bei einer Wellenlänge von 660 bis 730 nm und/oder bei blauem Licht bei einer Wellenlänge von 437 bis 450 nm.

Bevorzugt erfolgt in Schritt (e) die Belichtung der Pflanzen mit rotem Licht bei einer Wellenlänge von 660 bis 730 nm und bei blauem Licht bei einer Wellenlänge von 437 bis 450 nm, im Verhältnis von 1:4 bis 2:4, insbesondere bei einem Verhältnis von 1:1, 1:4 oder 2:3.

Bevorzugt werden in Schritt (e) die Pflanzen für eine Dauer von 10 bis 24 Stunden pro Tag, vorzugsweise von 12 bis 20 Stunden pro Tag, besonders bevorzugt 16 bis 18 Stunden pro Tag belichtet.

In bevorzugten Ausführungsformen weist die Nährstofflösung in Schritt (e) des erfindungsgemäßen Verfahrens eine Gesamtnährstoffkonzentration im Bereich von 600 bis 1200 ppm auf, bevorzugt 800 bis 1000 ppm.

Bevorzugt umfasst die Nährstofflösung pro Liter der Nährstofflösung mindestens 0,2 mL der Lösung, welche Mikroorganismen und/oder Mikroben-basierte Präparate enthält; bevorzugter mindestens 0,4 mL, noch bevorzugter mindestens 0,5 mL, am bevorzugtesten mindestens 0,6 mL, und insbesondere mindestens 0,7 mL.

Bevorzugt wird in Schritt (e) mit der Nährstofflösung bewässert, gefolgt von einer Unterbrechung der Bewässerung.

Bevorzugt erfolgt die Bewässerung über die Wurzeln der Pflanzen.

In bevorzugten Ausführungsformen erfolgt die Dauer der Bewässerung für einen Zeitraum von 2 bis 21 Minuten, vorzugsweise 3 bis 19 Minuten, besonders bevorzugt 4 bis 17 Minuten und ganz besonders bevorzugt 5 bis 15 Minuten.

Bevorzugt erfolgt nach der Bewässerung eine Unterbrechung von 400 bis 1440 Minuten, vorzugsweise 450 bis 750 Minuten, besonders bevorzugt 480 bis 720 Minuten.

Bevorzugt erfolgt die Bewässerung in Schritt (e) unabhängig von Belichtungs- und Dunkelphase.

Bevorzugt liegt in Schritt (e) die Temperatur der Nährstofflösung im Bereich von 12 bis 28 °C, vorzugsweise 16,5 bis 21,5 °C.

Bevorzugt beträgt in Schritt (e) die relative Luftfeuchte 50 bis 80%, vorzugsweise 60 bis 70%. Bevorzugt wird die relative Luftfeuchte in Abhängigkeit der Belichtungsphasen und der Dunkelphasen eingestellt.

Bevorzugt beträgt in Schritt (e) die relative Luftfeuchte während der Belichtung der Pflanzen 55 bis 80%, vorzugsweise 60-78%.

Bevorzugt beträgt in Schritt (e) die relative Luftfeuchte während der Dunkelphase 55-75%, vorzugsweise 57-71%.

Bevorzugt wird in Schritt (e) die Luftzirkulation im Bereich der Pflanzen auf einen Bereich von 0,05 bis 3,9 m/s, vorzugsweise 0,2 bis 1, 6 m/s, besonders bevorzugt von 0,4 bis 1,2 m/s eingestellt.

Bevorzugt wird in Schritt (e) die Lufttemperatur in Abhängigkeit der Belichtungsphasen und der Dunkelphasen eingestellt.

Bevorzugt liegt in Schritt (e) die Temperatur der Luft während der Belichtungsphasen im Bereich von 21 bis 25 °C, vorzugsweise 21,5 bis 24,5.

Bevorzugt liegt in Schritt (e) die Temperatur der Luft während der Dunkelphasen im Bereich von 17 bis 22 °C, vorzugsweise 17,5 bis 19,5.

Schritt (f) des erfindungsgemäßen Verfahrens umfasst das Umsetzen der gemäß Schritt (e) aufgezogenen Sämlinge.

In bevorzugten Ausführungsformen werden die Sämlinge bei Erreichen einer Zielgröße, vorzugsweise eines Wachstumsstadiums, in eine Kulturstation umgesetzt.

Bevorzugt ist die Zielgröße, vorzugsweise das Wachstumsstadium, nach 2 bis 5 Wochen erreicht.

Bevorzugt ist die Kulturstation ein vertikales Regal-, Säulen oder Wandsystem, welches vorzugweise automatisiert bewässerbar, belüftbar und/oder belichtbar ist.

In anderen bevorzugten Ausführungsformen werden die Sämlinge nicht umgesetzt; vorzugsweise werden diese in Schritt (c) direkt in das finale Kulturgefäß ausgesät oder gesteckt. Bevorzugt werden die Sämlinge geerntet, vorzugsweise nach 2 bis 3 Wochen.

Schritt (g) des erfindungsgemäßen Verfahrens umfasst das Kultivieren der gemäß Schritt (e) aufgezogenen Sämlinge oder der gemäß Schritt (f) umgesetzten Sämlinge.

In bevorzugten Ausführungsformen erfolgt in Schritt (g) keine Belichtung der Pflanzen.

In anderen bevorzugten Ausführungsformen erfolgt in Schritt (g) eine Belichtung der Pflanzen, vorzugsweise mit LED-Licht; bevorzugt erfolgt eine Dunkelphase, wenn die Pflanzen nicht belichtet werden. Bevorzugt erfolgen Belichtungsphase und Dunkelphase im Wechsel.

In bevorzugten Ausführungsformen erfolgt in Schritt (g) die Belichtung der Pflanzen mit Licht bei einer Wellenlänge von 380 bis 780 nm.

Bevorzugt erfolgt in Schritt (g) die Belichtung der Pflanzen mit rotem LED-Licht bei einer Wellenlänge von 660 bis 730 nm und/oder blauem LED-Licht bei einer Wellenlänge von 437 bis 450 nm.

Bevorzugt erfolgt in Schritt (g) die Belichtung der Pflanzen mit rotem LED-Licht bei einer Wellenlänge von 660 bis 730 nm und bei blauem LED-Licht bei einer Wellenlänge von 437 bis 450 nm, im Verhältnis von 5:1 bis 1:1, vorzugsweise bei einem Verhältnis von 5:1 oder 1:1.

Bevorzugt werden in Schritt (g) die Pflanzen für eine Dauer von 10 bis 24 Stunden pro Tag, vorzugsweise von 12 bis 20 Stunden pro Tag, besonders bevorzugt 16 bis 18 Stunden pro Tag belichtet.

Bevorzugt hängt in Schritt (g) die Dauer der Belichtung von physiologischen Wachstumsparametern der Pflanze ab.

In bevorzugten Ausführungsformen werden in Schritt (g) die Pflanzen für 12 bis 18 Stunden pro Tag belichtet, um eine Blütenbildung zu erreichen, vorzugsweise 14 bis 16 Stunden.

In anderen bevorzugten Ausführungsformen werden in Schritt (g) die Pflanzen für 10 bis 14 Stunden pro Tag belichtet, um eine Blütenbildung zu erreichen, vorzugsweise 11 bis 13 Stunden.

In bevorzugten Ausführungsformen werden in Schritt (g) die Pflanzen für 10 bis 16 Stunden pro Tag belichtet, um weiteres Wachstum zu erreichen, vorzugsweise 12 bis 14 Stunden.

In anderen bevorzugten Ausführungsformen werden in Schritt (g) die Pflanzen für 10 bis 12 Stunden pro Tag belichtet, um weiteres Wachstum zu erreichen, vorzugsweise 10 bis 11 Stunden.

Bevorzugt werden in Schritt (g) die Pflanzen mit der vorstehend beschriebenen erfindungsgemäßen Nährstofflösung in Kontakt gebracht.

Bevorzugt wird in Schritt (g) zur Herstellung der Nährstofflösung Wasser der gleichen Zusammensetzung verwendet wie in Schritt (d).

In bevorzugten Ausführungsformen weist die Nährstofflösung eine Gesamtnährstoffkonzentration im Bereich von 600 bis 2500 ppm auf, vorzugsweise 1200 bis 1900 ppm.

Bevorzugt umfasst die Nährstofflösung mindestens einen Gesamtanteil an Mikroorganismen von 50 ppm; bevorzugter mindestens 80ppm, noch bevorzugter mindestens 120 ppm, am bevorzugtesten mindestens 150ppm.

Bevorzugt wird in Schritt (g) mit der Nährstofflösung während der Belichtung der Pflanzen bewässert, gefolgt von einer Unterbrechung der Bewässerung.

Bevorzugt erfolgt die Bewässerung über die Wurzeln der Pflanzen.

In bevorzugten Ausführungsformen erfolgt die Dauer der Bewässerung während der Belichtung für einen Zeitraum von 3 bis 10 Minuten, vorzugsweise 4 bis 9 Minuten, besonders bevorzugt 5 bis 8 Minuten und ganz besonders bevorzugt 5 bis 6 Minuten.

Bevorzugt erfolgt nach der Bewässerung während der Belichtung eine Unterbrechung von 40 bis 95 Minuten, vorzugsweise 45 bis 90 Minuten, besonders bevorzugt 50 bis 85 Minuten.

In bevorzugten Ausführungsformen wird während der Dunkelphase gewässert, gefolgt von einer Unterbrechung der Bewässerung, wobei die Dauer der Unterbrechung länger ist als die Dauer der Bewässerung.

Bevorzugt erfolgt die Dauer der Bewässerung während der Dunkelphase für einen Zeitraum von 3 bis 10 Minuten, vorzugsweise 4 bis 9 Minuten, besonders bevorzugt 5 bis 8 Minuten und ganz besonders bevorzugt 5 bis 6 Minuten.

Bevorzugt erfolgt nach der Bewässerung während der Dunkelphase eine Unterbrechung von 200 bis 400 Minuten, vorzugsweise 250 bis 350 Minuten, besonders bevorzugt 280 bis 320 Minuten.

Bevorzugt wird in Schritt (g) während der Belichtungsphase und während der Dunkelphase bewässert.

Bevorzugt erfolgt die Steuerung der Bewässerung während der Belichtungsphase und/oder während der Dunkelphase in Abhängigkeit von der Bestimmung des Welkepunktes der Pflanze.

Bevorzugt liegt die Temperatur der Nährstofflösung im Bereich von 12 bis 28°C, vorzugsweise von 17,5 bis 19,5°C.

Bevorzugt beträgt in Schritt (g) die relative Luftfeuchte 50 bis 80%, vorzugsweise 60 bis 70%.

Bevorzugt beträgt in Schritt (g) die relative Luftfeuchte während der Belichtung der Pflanzen 55 bis 80%, vorzugsweise 60-78%.

Bevorzugt beträgt in Schritt (g) die relative Luftfeuchte während der Dunkelphase 55-75%, vorzugsweise 57-71%.

Bevorzugt wird in Schritt (g) die Luftzirkulation im Bereich der Pflanzen auf einen Bereich von 0,05 bis 3,9 m/s, vorzugsweise 0,2 bis 1, 6 m/s, besonders bevorzugt von 0,4 bis 1,2 m/s eingestellt.

Bevorzugt liegt in Schritt (g) die Temperatur der Luft während der Belichtungsphasen im Bereich von 21 bis 25 °C, vorzugsweise 22,5 bis 24,5.

Bevorzugt liegt in Schritt (g) die Temperatur der Luft während der Dunkelphasen im Bereich von 18 bis 22 °C, vorzugsweise 18,5 bis 20,5.

Bevorzugt wird in Schritt (g) der CO₂-Gehalt während der Belichtungsphasen reguliert, vorzugsweise auf einen Gehalt von mindestens 400 ppm.

Bevorzugt wird der COz Gehalt auf einen Bereich von 700 bis 1400 ppm, vorzugsweise 800 bis 1300 ppm, besonders bevorzugt von 900 bis 1200 ppm eingestellt.

Bevorzugt dauert die Dauer von der Aussaat bis zur ersten Teilernte oder der Kompletternte der Pflanze wenigstens 14 Tage, vorzugsweise wenigstens 18 Tage, besonders bevorzugt wenigstens 30 Tage, und insbesondere wenigstens 32 Tage.

In bevorzugten Ausführungsformen umfasst das erfindungsgemäße Verfahren die Applikation und/oder Begasung mit pflanzlichen, natürlichen oder synthetischen Wachstumsregulatoren, Hormonen, Aktivatoren, deren Vorstufen oder Derivaten; vorzugsweise ausgewählt aus Abszissinsäure, Auxin, Cytokinin, Ethylen, Brassinosteroide, Strigolactone, Gibberelinsäure, Salicylsäure und Jasmonsäure.

In bevorzugten Ausführungsformen umfasst das erfindungsgemäße Verfahren die mechanische Verletzung und/ oder mechanische Reizung an Wurzel und oberirdischen Pflanzenteilen; vorzugsweise durch Schnitt- bzw. Trimmmaßnahmen oder Streichel-Vorrichtungen/Streichel-Wagen.

In bevorzugten Ausführungsformen werden die in der Nährstofflösung enthaltenen Nährstoffe separat dosiert; vorzugsweise über einen eigenen Vorratstank.

Bevorzugt dauert die Dauer von der Aussaat bis zur ersten Teilernte oder der Kompletternte der Pflanze wenigstens 14 Tage, vorzugsweise wenigstens 18 Tage, besonders bevorzugt wenigstens 30 Tage, und insbesondere wenigstens 32 Tage.

In bevorzugten Ausführungsformen werden Wasserwechsel und/oder Reinigungsarbeiten an wasserführenden Elementen, insbesondere Nährstofftanks, vorgenommen, die während des erfindungsgemäßen Verfahrens zum Einsatz kommen, vorzugsweise wobei Salzablagerungen gelöst werden.

Bevorzugt wird zur Reinigung eine Reinigungslösung verwendet, vorzugsweise eine pflanzenverträgliche und lebensmittelechte Reinigungslösung.

Bevorzugt erfolgt in regelmäßigen Zeitabständen, vorzugsweise in Abständen von 3 bis 12 Wochen, vorzugsweise von 4 bis 5 Wochen, eine vollständige Entleerung und Reinigung der Nährstofflösungstanks.

Bevorzugt werden nach Entleerung der Tanks Schlamm und trockene Ablagerung, insbesondere Salzablagerungen, entfernt.

Bevorzugt werden keimabtötende und/oder oxidierende Mittel zur Reinigung der inneren Flächen der Nährstofftanks eingesetzt.

Bevorzugt enthält das Mittel zur Reinigung Wasserstoffperoxid oder Ethanol.

Bevorzugte Ausführungsformen der Erfindung sind nachfolgend als Sätze 1 bis 124 zusammengefasst:
Satz 1: Eine Nährstoffkombination für die erdelose Kultur von Pflanzen, insbesondere bei vertikaler Landwirtschaft über wenigstens zwei Ebenen, vorzugsweise wenigstens drei Ebenen, umfassend zumindest: Stickstoff, in einer Menge im Bereich von 0,001 bis 15 Gew.-%; Phosphor, in einer Menge im Bereich von 0,01 bis 6,0 Gew.-%; Kalium, in einer Menge im Bereich von 1,0 bis 30 Gew.-%; Schwefel, in einer Menge im Bereich von 0,1 bis 10 Gew.-%; Calcium, in einer Menge im Bereich von 0,4 bis 10 Gew.-%; Magnesium, in einer Menge im Bereich von 0,04 bis 5,0 Gew.-%; Bor, in einer Menge im Bereich von 0,001 bis 0,05 Gew.-%; *Molybdän, in einer Menge im Bereich von 0,0005 bis 0,05 Gew.-%; Kupfer, in einer Menge im Bereich von 0,0005 bis 0,05 Gew.-%; Mangan, in einer Menge im Bereich von 0,001 bis 0,1 Gew.-%; Eisen, in einer Menge im Bereich von 0,001 bis 1,0 Gew.-%; und Zink, in einer Menge im Bereich von 0,001 bis 0,4 Gew.-%; jeweils bezogen auf das Gesamtgewicht der Nährstoffkombination; ggfs. Mikroorganismen und/oder Mikroben-basierte Präparate, vorzugsweise bestehend aus Chitin oder Toxinen, ausgewählt aus der Gruppe bestehend aus *Arthrobacter globiformis, Azospilrillum brasilense, Azospilrillum lipoferum, Azotobacter chroococcum, Azotobacter paspali, Azotobacter vinelandii, Bacillus amyloliquefaciens, Bacillus atrophaeus, Bacillus licheniformis, Bacillus megaterium, Bacillus pumilus, Bacillus subtilis, Bacillus thuringiensis, Bififobacterium animalis, Bififobacterium lactis, Bififobacterium longum, Brevibacillus brevis, Cellulomonas fimi,Lactobacillus acidophilus, Lactobacillus casei, Lactobacillus lactis, Lactobacillus plantarum, Lactobacillus rhamnosus, Lactococcus lactis, Leuconostoc pseudomesenteorides, Micrococcus luteus, Phanerochaete chrysosporium, Pseudomonas aeruginosa, Pseudomonas argentinensis, Pseudomonas azotoformans, Pseudomonas chlororaphis, Pseudomonas flourescens, Pseudomonas fulva, Pseudomonas nitroreducens, Pseudomonas poae, Pseudomonas putida, Pseudomonas stutzeri, Rhodopseudomonas palustris, Rhodospirillum rubrum, Saccharomyecs cervisiae, Streptococcus thermophilus, Streptomyces griseus,* und *Thrichoderma reesei;* und ggfs. Fermente ausgewählt aus Algen, Kompost, Melasse und Mungbohnen; wobei das Verhältnis von Stickstoff zu Kalium mindestens 1,0 : 2,0 beträgt.
Satz 2: Die Nährstoffkombination nach Satz 1, wobei das Verhältnis von Stickstoff zu Phosphor zu Kalium (N : P : K) im Bereich von 1,0 : 0,1 : 1,5 bis 1,0 : 1,0 : 8,0 liegt, bevorzugt von 1,0 : 0,2 : 2,5 bis 1,0 : 0,7 : 6,0, bevorzugter von 1,0 : 0,3 : 3,5 bis 1,0 : 0,5 : 4,5.
Satz 3: Die Nährstoffkombination nach Satz 1 oder 2, wobei die Konzentration von Kalium größer ist als die Konzentration von Stickstoff.
Satz 4: Die Nährstoffkombination nach einem der vorstehenden Sätze, wobei die Konzentration von Kalium größer ist als die Konzentration von Phosphor.
Satz 5: Die Nährstoffkombination nach einem der vorstehenden Sätze, wobei die Konzentration von Stickstoff größer ist als die Konzentration von Phosphor.
Satz 6: Die Nährstoffkombination nach einem der vorstehenden Sätze, wobei das Verhältnis von Stickstoff zu Kalium mindestens 1,0 : 2,4 beträgt, bevorzugt mindestens 1,0 : 2,7, bevorzugter mindestens 1,0 : 3,0, noch bevorzugter mindestens 1,0 : 3,3, am bevorzugtesten mindestens 1,0 : 3,6, und insbesondere mindestens 1,0 : 3,9.
Satz 7: Die Nährstoffkombination nach einem der vorstehenden Sätze, wobei das Verhältnis von Stickstoff zu Kalium höchstens 1,0 : 10 beträgt, bevorzugt höchstens 1,0 : 8,0, bevorzugter höchstens 1,0 : 7,0, noch bevorzugter höchstens 1,0 : 6,0, am bevorzugtesten höchstens 1,0 : 5,5, und insbesondere höchstens 1,0 : 5,0.
Satz 8: Die Nährstoffkombination nach einem der vorstehenden Sätze, welche Natrium umfasst. Satz 9: Die Nährstoffkombination nach einem der vorstehenden Sätze, welche Chlor umfasst.
Satz 10: Die Nährstoffkombination nach einem der vorstehenden Sätze, welche eine Stickstoff-Quelle umfasst ausgewählt aus der Gruppe bestehend aus Calciumnitrat, Natriumnitrat, Kaliumnitrat, Ammoniumnitrat, Monoammoniumphosphat, Diammoniumphosphat, Triammoniumphosphat, Ammoniumsulfat, Ammoniumthiosulfat, Ammoniumchlorid, Ammoniak, Calciumcyanamid, Calciumammoniumnitrat, Harnstoff, Ammoniumlignosulfonat, Ammoniumbifluorid, und Ammoniumheptamolybdat; bevorzugt Calciumnitrat.
Satz 11: Die Nährstoffkombination nach einem der vorstehenden Sätze, welche eine Phosphor-Quelle umfasst ausgewählt aus der Gruppe bestehend aus Phosphorpentoxid, Phosphorsäure, Monoammoniumphosphat, Diammoniumphosphat, Triammoniumphosphat, Kaliumpyrophosphat, Natriumpyrophosphat, Kaliumphosphat, und Natriumphosphat; bevorzugt Phosphorpentoxid.
Satz 12: Die Nährstoffkombination nach einem der vorstehenden Sätze, welche eine Kalium-Quelle umfasst ausgewählt aus der Gruppe bestehend aus Kaliumoxid, Kaliumchlorid, Kaliumsulfat, Kaliumcarbonat, Kaliumacetat, Kaliumcitrat, Kaliumhydroxid, Kaliummanganat, Kaliumphosphat, Kaliummolybdat, Kaliumthiosulfat, und Kaliumnitrat; bevorzugt Kaliumoxid.
Satz 13: Die Nährstoffkombination nach einem der vorstehenden Sätze, welche eine Schwefel-Quelle umfasst ausgewählt aus der Gruppe bestehend aus Ammoniumsulfat, Calciumsulfat, Kaliumsulfat, Magnesiumsulfat, Schwefelsäure, Kobaltsulfat, Kupfersulfat, Eisensulfat, Schwefeltrioxid, und Schwefel; bevorzugt Schwefeltrioxid.
Satz 14: Die Nährstoffkombination nach einem der vorstehenden Sätze, welche eine Calcium-Quelle umfasst ausgewählt aus der Gruppe bestehend aus Calciumnitrat, Calciumcyanamid, Calciumacetat, Calciumborat, Calciumcarbonat, Calciumchlorid, Calciumcitrat, Calciumlactat, Calciumoxid, Calciumsulfat, Calciumtartrat, Calciumammoniumnitrat, und Calciumlignosulfonat; bevorzugt Calciumoxid. Satz 15: Die Nährstoffkombination nach einem der vorstehenden Sätze, welche eine Magnesium-Quelle umfasst ausgewählt aus der Gruppe bestehend aus Magnesiumoxid, Magnesiumacetat, Magnesiumborat, Magnesiumchlorid, Magnesiumcitrat, Magnesiumnitrat, Magnesiumphosphat, und Magnesiumsulfat; bevorzugt Magnesiumoxid.
Satz 16: Die Nährstoffkombination nach einem der vorstehenden Sätze, welche eine Bor-Quelle umfasst ausgewählt aus der Gruppe bestehend aus Borsäure, Calciumborat, Kaliumborhydrid, Borax, Bortrioxid, Kaliumtetraborat, Natriumborat, Natriumborhydrid, und Natriumtetraborat.
Satz 17: Die Nährstoffkombination nach einem der vorstehenden Sätze, welche eine Molybdän-Quelle umfasst ausgewählt aus der Gruppe bestehend aus Molybdänsäure, Calciummolybdat, Kaliummolybdat, Natriummolybdat, und Ammoniummolybdat.
Satz 18: Die Nährstoffkombination nach einem der vorstehenden Sätze, welche eine Kupfer-Quelle umfasst ausgewählt aus der Gruppe bestehend aus Kupferacetat, Kupferchlorat, Kupferchlorid, Kupfercitrat, Kupfernitrat, und Kupfersulfat.
Satz 19: Die Nährstoffkombination nach einem der vorstehenden Sätze, welche eine Mangan-Quelle umfasst ausgewählt aus der Gruppe bestehend aus Manganacetat, Manganchlorid, Mangannitrat, Manganphosphat, und Mangansulfat.
Satz 20: Die Nährstoffkombination nach einem der vorstehenden Sätze, welche eine Eisen-Quelle umfasst ausgewählt aus der Gruppe bestehend aus Eisenchlorid, Eisencitrat, Eisennitrat, Eisenoxid, Eisencitrat, Eisensulfat, und Eisensulfonat.
Satz 21: Die Nährstoffkombination nach einem der vorstehenden Sätze, welche eine Zink-Quelle umfasst ausgewählt aus der Gruppe bestehend aus Zinkoxid, Zinkacetat, Zinkchlorid, Zinkcitrat, Zinknitrat, und Zinksulfat.
Satz 22: Die Nährstoffkombination nach einem der vorstehenden Sätze, welche fest ist, vorzugsweise ein Pulver.
Satz 23: Die Nährstoffkombination nach einem der Sätze 1 bis 21, welche flüssig ist.
Satz 24: Die Nährstoffkombination Satz 23, wobei die Nährstoffkombination Stickstoff in einer Menge umfasst von mindestens 0,2 g pro Liter der Nährstoffkombination, bevorzugt mindestens 0,4 g pro Liter, bevorzugter mindestens 0,6 g pro Liter, noch bevorzugter mindestens 0,8 g pro Liter, am bevorzugtesten mindestens 1,0 g pro Liter, und insbesondere mindestens 1,2 g pro Liter.
Satz 25: Die Nährstoffkombination nach Satz 23 oder 24, wobei die Nährstoffkombination Stickstoff in einer Menge umfasst von höchstens 3,5 g pro Liter der Nährstoffkombination, bevorzugt höchstens 3,0 g pro Liter, bevorzugter höchstens 2,5 g pro Liter, noch bevorzugter höchstens 2,0 g pro Liter, am bevorzugtesten höchstens 1,6 g pro Liter, und insbesondere höchstens 1,2 g pro Liter.
Satz 26: Die Nährstoffkombination nach einem der Sätze 23 bis 25, wobei die Nährstoffkombination Stickstoff in einer Menge umfasst im Bereich von 0,005 bis 8,0 g pro Liter der Nährstoffkombination, bevorzugt im Bereich von 0,01 bis 6,0 g pro Liter, bevorzugter im Bereich von 0,015 bis 4,0 g pro Liter, noch bevorzugter im Bereich von 0,2 bis 2,0 g pro Liter, am bevorzugtesten im Bereich von 0,6 bis 1,5 g pro Liter, und insbesondere im Bereich von 1,0 bis 1,25 g pro Liter.
Satz 27: Die Nährstoffkombination nach einem der Sätze 23 bis 26, wobei die Nährstoffkombination Phosphor in einer Menge umfasst von mindestens 0,4 g pro Liter der Nährstoffkombination, bevorzugt mindestens 0,5 g pro Liter, bevorzugter mindestens 0,6 g pro Liter, noch bevorzugter mindestens 0,7 g pro Liter, am bevorzugtesten mindestens 0,8 g pro Liter, und insbesondere mindestens 0,9 g pro Liter. Satz 28: Die Nährstoffkombination nach einem der Sätze 23 bis 27, wobei die Nährstoffkombination Phosphor in einer Menge umfasst von höchstens 3,0 g pro Liter der Nährstoffkombination, bevorzugt höchstens 2,5 g pro Liter, bevorzugter höchstens 2,0 g pro Liter, noch bevorzugter höchstens 1,5 g pro Liter, am bevorzugtesten höchstens 1,0 g pro Liter, und insbesondere höchstens 0,8 g pro Liter.
Satz 29: Die Nährstoffkombination nach einem der Sätze 23 bis 28, wobei die Nährstoffkombination Phosphor in einer Menge umfasst im Bereich von 0,05 bis 5,0 g pro Liter der Nährstoffkombination, bevorzugt im Bereich von 0,1 bis 2,5 g pro Liter, bevorzugter im Bereich von 0,2 bis 1,8 g pro Liter, noch bevorzugter im Bereich von 0,3 bis 1,4 g pro Liter, am bevorzugtesten im Bereich von 0,4 bis 1,2 g pro Liter, und insbesondere im Bereich von 0,5 bis 1,0 g pro Liter.
Satz 30: Die Nährstoffkombination nach einem der Sätze 23 bis 29, wobei die Nährstoffkombination Kalium in einer Menge umfasst von mindestens 2,5 g pro Liter der Nährstoffkombination, bevorzugt mindestens 3,0 g pro Liter, bevorzugter mindestens 3,5 g pro Liter, noch bevorzugter mindestens 4,0 g pro Liter, am bevorzugtesten mindestens 4,5 g pro Liter, und insbesondere mindestens 5,0 g pro Liter. Satz 31: Die Nährstoffkombination nach einem der Sätze 23 bis 30, wobei die Nährstoffkombination Kalium in einer Menge umfasst von höchstens 8,5 g pro Liter der Nährstoffkombination, bevorzugt höchstens 8,0 g pro Liter, bevorzugter höchstens 7,5 g pro Liter, noch bevorzugter höchstens 7,0 g pro Liter, am bevorzugtesten höchstens 6,5 g pro Liter, und insbesondere höchstens 6,0 g pro Liter.
Satz 32: Die Nährstoffkombination nach einem der Sätze 23 bis 31, wobei die Nährstoffkombination Kalium in einer Menge umfasst im Bereich von 2,0 bis 8,5 g pro Liter der Nährstoffkombination, bevorzugt im Bereich von 2,5 bis 8,0 g pro Liter, bevorzugter im Bereich von 3,0 bis 7,5 g pro Liter, noch bevorzugter im Bereich von 3,5 bis 7,0 g pro Liter, am bevorzugtesten im Bereich von 4,0 bis 6,5 g pro Liter, und insbesondere im Bereich von 4,5 bis 6,0 g pro Liter.
Satz 33: Die Nährstoffkombination nach einem der Sätze 23 bis 32, wobei die Nährstoffkombination Schwefel in einer Menge umfasst im Bereich von 0,2 bis 5,0 g pro Liter der Nährstoffkombination, bevorzugt im Bereich von 0,4 bis 3,0 g pro Liter, bevorzugter im Bereich von 0,6 bis 2,5 g pro Liter, noch bevorzugter im Bereich von 0,8 bis 2,0 g pro Liter, am bevorzugtesten im Bereich von 1,0 bis 1,5 g pro Liter, und insbesondere im Bereich von 1,2 bis 1,3 g pro Liter.
Satz 34: Die Nährstoffkombination nach einem der Sätze 23 bis 33, wobei die Nährstoffkombination Calcium in einer Menge umfasst im Bereich von 0,5 bis 9,5 g pro Liter der Nährstoffkombination, bevorzugt im Bereich von 1,0 bis 9,0 g pro Liter, bevorzugter im Bereich von 2,0 bis 8,5 g pro Liter, noch bevorzugter im Bereich von 3,0 bis 8,0 g pro Liter, am bevorzugtesten im Bereich von 4,0 bis 7,5 g pro Liter, und insbesondere im Bereich von 5,0 bis 7,0 g pro Liter.
Satz 35: Die Nährstoffkombination nach einem der Sätze 23 bis 34, wobei die Nährstoffkombination Magnesium in einer Menge umfasst im Bereich von 0,05 bis 4,0 g pro Liter der Nährstoffkombination, bevorzugt im Bereich von 0,1 bis 3,0 g pro Liter, bevorzugter im Bereich von 0,2 bis 2,5 g pro Liter, noch bevorzugter im Bereich von 0,4 bis 2,0 g pro Liter, am bevorzugtesten im Bereich von 0,6 bis 1,5 g pro Liter, und insbesondere im Bereich von 0,8 bis 1,0 g pro Liter.
Satz 36: Die Nährstoffkombination nach einem der Sätze 23 bis 35, wobei die Nährstoffkombination Bor in einer Menge umfasst im Bereich von 0,002 bis 0,035 g pro Liter der Nährstoffkombination, bevorzugt im Bereich von 0,003 bis 0,03 g pro Liter, bevorzugter im Bereich von 0,004 bis 0,025 g pro Liter, noch bevorzugter im Bereich von 0,005 bis 0,02 g pro Liter, am bevorzugtesten im Bereich von 0,006 bis 0,015 g pro Liter, und insbesondere im Bereich von 0,007 bis 0,009 g pro Liter.
Satz 37: Die Nährstoffkombination nach einem der Sätze 23 bis 36, wobei die Nährstoffkombination Molybdän in einer Menge umfasst im Bereich von 0,001 bis 0,002 g pro Liter der Nährstoffkombination. Satz 38: Die Nährstoffkombination nach einem der Sätze 23 bis 37, wobei die Nährstoffkombination Kupfer in einer Menge umfasst im Bereich von 0,001 bis 0,002 g pro Liter der Nährstoffkombination. Satz 39: Die Nährstoffkombination nach einem der Sätze 23 bis 38, wobei die Nährstoffkombination Mangan in einer Menge umfasst im Bereich von 0,002 bis 0,05 g pro Liter der Nährstoffkombination, bevorzugt im Bereich von 0,003 bis 0,04 g pro Liter, bevorzugter im Bereich von 0,004 bis 0,03 g pro Liter, noch bevorzugter im Bereich von 0,005 bis 0,025 g pro Liter, am bevorzugtesten im Bereich von 0,006 bis 0,02 g pro Liter, und insbesondere im Bereich von 0,007 bis 0,016 g pro Liter.
Satz 40: Die Nährstoffkombination nach einem der Sätze 23 bis 39, wobei die Nährstoffkombination Eisen in einer Menge umfasst im Bereich von 0,002 bis 0,5 g pro Liter der Nährstoffkombination, bevorzugt im Bereich von 0,005 bis 0,3 g pro Liter, bevorzugter im Bereich von 0,01 bis 0,2 g pro Liter, noch bevorzugter im Bereich von 0,02 bis 0,15 g pro Liter, am bevorzugtesten im Bereich von 0,03 bis 0,12 g pro Liter, und insbesondere im Bereich von 0,04 bis 0,09 g pro Liter.
Satz 41: Die Nährstoffkombination nach einem der Sätze 23 bis 40, wobei die Nährstoffkombination Zink in einer Menge umfasst im Bereich von 0,002 bis 0,2 g pro Liter der Nährstoffkombination, bevorzugt im Bereich von 0,005 bis 0,16 g pro Liter, bevorzugter im Bereich von 0,01 bis 0,12 g pro Liter, noch bevorzugter im Bereich von 0,007 bis 0,08 g pro Liter, am bevorzugtesten im Bereich von 0,008 bis 0,04 g pro Liter, und insbesondere im Bereich von 0,009 bis 0,02 g pro Liter.
Satz 42: Die Nährstoffkombination nach einem der Sätze 23 bis 41, welche Stickstoff, in einer Menge im Bereich von 0,001 bis 10 g; Phosphor, in einer Menge im Bereich von 0,01 bis 6,0 g; Kalium, in einer Menge im Bereich von 1,0 bis 10 g; Schwefel, in einer Menge im Bereich von 0,1 bis 6,0 g; Calcium, in einer Menge im Bereich von 0,4 bis 10 g; Magnesium, in einer Menge im Bereich von 0,04 bis 5,0 g; Bor, in einer Menge im Bereich von 0,001 bis 0,05 g; Molybdän, in einer Menge im Bereich von 0,0005 bis 0,05 g; Kupfer, in einer Menge im Bereich von 0,0005 bis 0,05 g; Mangan, in einer Menge im Bereich von 0,001 bis 0,1 g; Eisen, in einer Menge im Bereich von 0,001 bis 1,0 g; und Zink, in einer Menge im Bereich von 0,001 bis 0,4 g umfasst; jeweils pro Liter der Nährstoffkombination. Satz 43: Die Nährstoffkombination nach einem der Sätze 23 bis 42, welche ein erstes Nährstoffkonzentrat A und ein zweites Nährstoffkonzentrat B umfasst.
Satz 44: Die Nährstoffkombination nach Satz 43, wobei das Nährstoffkonzentrat A Stickstoff, Calcium, Magnesium, Kupfer, Mangan, Eisen und/oder Zink umfasst.
Satz 45: Die Nährstoffkombination nach Satz 43 oder 44, wobei das Nährstoffkonzentrat B Stickstoff, Phosphor, Kalium, Schwefel, Bor und/oder Molybdän umfasst.
Satz 46: Die Nährstoffkombination nach einem der Sätze 43 bis 45, wobei das erste Nährstoffkonzentrat A und das zweite Nährstoffkonzentrat B in einem Mengenverhältnis von 1:2 bis 2:1 vorliegen. Satz 47: Die Nährstoffkombination nach einem der Sätze 43 bis 46, wobei das erste Nährstoffkonzentrat A Stickstoff in einer Menge umfasst von mindestens 0,1 g pro Liter des ersten Nährstoffkonzentrats A, bevorzugt mindestens 0,2 g pro Liter, bevorzugter mindestens 0,4 g pro Liter, noch bevorzugter mindestens 0,6 g pro Liter, am bevorzugtesten mindestens 0,8 g pro Liter, und insbesondere mindestens 1,0 g pro Liter.
Satz 48: Die Nährstoffkombination nach einem der Sätze 43 bis 47, wobei das erste Nährstoffkonzentrat A Stickstoff in einer Menge umfasst von höchstens 3,5 g pro Liter des ersten Nährstoffkonzentrats A, bevorzugt höchstens 3,0 g pro Liter, bevorzugter höchstens 2,5 g pro Liter, noch bevorzugter höchstens 2,0 g pro Liter, am bevorzugtesten höchstens 1,6 g pro Liter, und insbesondere höchstens 1,2 g pro Liter.
Satz 49: Die Nährstoffkombination nach einem der Sätze 43 bis 48, wobei das erste Nährstoffkonzentrat A Stickstoff in einer Menge umfasst im Bereich von 0,05 bis 8,0 g pro Liter des ersten Nährstoffkonzentrats A, bevorzugt im Bereich von 0,1 bis 6,0 g pro Liter, bevorzugter im Bereich von 0,15 bis 4,0 g pro Liter, noch bevorzugter im Bereich von 0,2 bis 2,0 g pro Liter, am bevorzugtesten im Bereich von 0,6 bis 1,5 g pro Liter, und insbesondere im Bereich von 1,0 bis 1,25 g pro Liter.
Satz 50: Die Nährstoffkombination nach einem der Sätze 43 bis 49, wobei das erste Nährstoffkonzentrat B Stickstoff in einer Menge umfasst von mindestens 0,1 g pro Liter des ersten Nährstoffkonzentrats B, bevorzugt mindestens 0,2 g pro Liter, bevorzugter mindestens 0,4 g pro Liter, noch bevorzugter mindestens 0,6 g pro Liter, am bevorzugtesten mindestens 0,7 g pro Liter, und insbesondere mindestens 0,08 g pro Liter.
Satz 51: Die Nährstoffkombination nach einem der Sätze 43 bis 50, wobei das erste Nährstoffkonzentrat B Stickstoff in einer Menge umfasst von höchstens 0,5 g pro Liter des ersten Nährstoffkonzentrats B, bevorzugt höchstens 0,3 g pro Liter, bevorzugter höchstens 0,25 g pro Liter, noch bevorzugter höchstens 0,2 g pro Liter, am bevorzugtesten höchstens 0,15 g pro Liter, und insbesondere höchstens 0,09 g pro Liter.
Satz 52: Die Nährstoffkombination nach einem der Sätze 43 bis 51, wobei das erste Nährstoffkonzentrat B Stickstoff in einer Menge umfasst im Bereich von 0,05 bis 1,0 g pro Liter des ersten Nährstoffkonzentrats B, bevorzugt im Bereich von 0,1 bis 0,6 g pro Liter, bevorzugter im Bereich von 0,2 bis 0,4 g pro Liter, noch bevorzugter im Bereich von 0,4 bis 0,2 g pro Liter, am bevorzugtesten im Bereich von 0,6 bis 0,15 g pro Liter, und insbesondere im Bereich von 0,07 bis 0,09 g pro Liter.
Satz 53: Eine Nährstofflösung umfassend die Nährstoffkombination nach einem der vorstehenden Sätze und Wasser.
Satz 54: Die Nährstofflösung nach Satz 53, welche eine Gesamtnährstoffkonzentration im Bereich von 1 bis 2300 ppm aufweist.
Satz 55: Die Nährstofflösung nach Satz 53 oder 54, welche eine Gesamtnährstoffkonzentration im Bereich von 600 bis 2300 ppm, bevorzugt von 600 bis 1300 ppm aufweist, bevorzugter von 700 bis 1200 ppm, und noch bevorzugter von 800 bis 1000 ppm.
Satz 56: Die Nährstofflösung nach Satz 53 oder 55, welche eine Gesamtnährstoffkonzentration im Bereich von 600 bis 2300 ppm aufweist, bevorzugt von 1400 bis 2300 ppm, bevorzugter von 1500 bis 2100 ppm, und noch bevorzugter von 1600 bis 1900 ppm.
Satz 57: Die Nährstofflösung nach einem der Sätze 53 bis 56, welche einen pH-Wert im Bereich von 4,0 bis 8,0 aufweist, bevorzugt von 5,0 bis 7,0, und bevorzugter von 5,6 bis 6,0.
Satz 58: Ein Verfahren für die erdelose Kultur von Pflanzen, insbesondere bei vertikaler Landwirtschaft über wenigstens zwei Ebenen, vorzugsweise wenigstens drei Ebenen, das Verfahren umfassend zumindest die Schritte: Bereitstellen von Stecklingen, Saatgut oder Pflanzgut; Bereitstellen von Substrat; Aussähen oder Stecken der gemäß Schritt (a) bereitgestellten Stecklinge, des Saatgutes oder des Pflanzgutes in das gemäß Schritt (b) bereitgestellte Substrat; Bereitstellen der Nährstofflösung gemäß einem der Sätze 53 bis 57; Aufziehen der gemäß Schritt (c) ausgesäten oder gesteckten Stecklinge, des Saatguts oder des Pflanzgutes zu Sämlingen, vorzugsweise bis zum Erreichen einer Zielgröße; wobei Schritt (e) das Inkontaktbringen des gemäß Schritt (b) bereit gestellten Substrates und der gemäß Schritt (d) bereitgestellten Nährstofflösung umfasst; (f) Ggf. umsetzen der gemäß Schritt (e) aufgezogenen Sämlinge; und (g) Ggf. kultivieren der gemäß Schritt (e) aufgezogenen Sämlinge oder der gemäß Schritt (f) umgesetzten Sämlinge.
Satz 59: Das Verfahren nach Satz 58, wobei die Pflanzen ausgewählt sind aus der Gruppe bestehend aus Salaten, Kohlen, Kräutern, fruchttragendem Gemüse, insbesondere Gurke, Tomate oder Paprika, und blütenbildenden Kräutern.
Satz 60: Das Verfahren nach Satz 58 oder 59, wobei das Substrat eine oder mehrere Komponenten aufweist, die unabhängig voneinander ausgewählt sind aus der Gruppe bestehend aus Humus, Kompost, gewachsener Gartenboden, Ackerboden, Kokosfasern, Holzfasern, Steinwolle, Holzwolle, Sphagnum-Moos, Torf-Moos, Perlite, Sand, Kies; flüssiges, halbfestes oder festes Nährmedium, vorzugsweise Agarose-Gel; und synthetischen Stoffen oder Fasern, vorzugsweise Polyvinylchlorid.
Satz 61: Das Verfahren nach einem der Sätze 58 bis 60, wobei Schritt (b) das Verdichten des Substrats umfasst.
Satz 62: Das Verfahren nach einem der Sätze 58 bis 61, wobei das gemäß Schritt (b) bereitgestellte Substrat Nährstofflösung gemäß einem der Sätze 52 bis 56 aufweist.
Satz 63: Das Verfahren nach Satz 62, wobei die Nährstofflösung eine Gesamtnährstoffkonzentration im Bereich von 1 bis 900 ppm aufweist.
Satz 64: Das Verfahren nach einem der Sätze 58 bis 63, wobei die Stecklinge, das Saatgut oder das Pflanzgut ab der Aussaat oder dem Stecken abgedeckt werden.
Satz 65: Das Verfahren nach Satz 64, wobei das Abdecken für 5 bis 10 Tage, vorzugsweise für 6 bis 9 Tage, besonders bevorzugt für 7 bis 8 Tage erfolgt.
Satz 66: Das Verfahren nach einem der Sätze 58 bis 65, wobei in Schritt (e) eine Belichtung der Pflanzen erfolgt; bevorzugt erfolgt eine Dunkelphase, wenn die Pflanzen nicht belichtet werden.
Satz 67: Das Verfahren nach Satz 66, wobei in Schritt (e) die Belichtung der Pflanzen mit LED-Licht erfolgt.
Satz 68: Das Verfahren nach Satz 66 oder 67, wobei in Schritt (e) die Belichtung der Pflanzen mit Licht bei einer Wellenlänge von 380 bis 780 nm erfolgt.
Satz 69: Das Verfahren nach einem der Sätze 66 bis 68, wobei in Schritt (e) die Belichtung der Pflanzen mit rotem Licht bei einer Wellenlänge von 660 bis 730 nm und/oder bei blauem Licht bei einer Wellenlänge von 437 bis 450 nm erfolgt.
Satz 70: Das Verfahren nach einem der Sätze 66 bis 69, wobei in Schritt (e) die Belichtung der Pflanzen mit rotem Licht bei einer Wellenlänge von 660 bis 730 nm und bei blauem Licht bei einer Wellenlänge von 437 bis 450 nm erfolgt, im Verhältnis von 1:4 bis 2:4, insbesondere bei einem Verhältnis von 1:1, 1:4 oder 2:3.
Satz 71: Das Verfahren nach einem der Sätze 66 bis 70, wobei in Schritt (e) die Pflanzen für eine Dauer von 10 bis 24 Stunden pro Tag, vorzugsweise von 12 bis 20 Stunden pro Tag, besonders bevorzugt 16 bis 18 Stunden pro Tag belichtet werden.
Satz 72: Das Verfahren nach einem der Sätze 58 bis 71, wobei in Schritt (e) die Nährstofflösung eine Gesamtnährstoffkonzentration im Bereich von 700 bis 1200 ppm aufweist, bevorzugt 800 bis 1000 ppm. Satz 73: Das Verfahren nach einem der Sätze 58 bis 72, wobei in Schritt (e) mit der Nährstofflösung bewässert wird, gefolgt von einer Unterbrechung der Bewässerung.
Satz 74: Das Verfahren nach Satz 73, wobei die Bewässerung über die Wurzeln der Pflanzen erfolgt. Satz 75: Das Verfahren nach Satz 73 oder 74, wobei die Dauer der Bewässerung für einen Zeitraum von 2 bis 21 Minuten, vorzugsweise 3 bis 19 Minuten, besonders bevorzugt 4 bis 17 Minuten und ganz besonders bevorzugt 5 bis 15 Minuten erfolgt.
Satz 76: Das Verfahren nach einem der Sätze 73 bis 75, wobei nach der Bewässerung eine Unterbrechung von 400 bis 1440 Minuten, vorzugsweise 450 bis 750 Minuten, besonders bevorzugt 480 bis 720 Minuten erfolgt.
Satz 77: Das Verfahren nach einem der Sätze 58 bis 76, wobei in Schritt (e) die Temperatur der Nährstofflösung im Bereich von 12 bis 28 °C, vorzugsweise 16,5 bis 21,5 °C liegt.
Satz 78: Das Verfahren nach einem der Sätze 58 bis 77, wobei in Schritt (e) die relative Luftfeuchte 50 bis 80%, vorzugsweise 60 bis 70% beträgt.
Satz 79: Das Verfahren nach einem der Sätze 58 bis 78, wobei in Schritt (e) die relative Luftfeuchte während der Belichtung der Pflanzen 55 bis 80%, vorzugsweise 60-78%, beträgt.
Satz 80: Das Verfahren nach einem der Sätze 58 bis 79, wobei in Schritt (e) die relative Luftfeuchte während der Dunkelphase 55-75%, vorzugsweise 57-71%, beträgt.
Satz 81: Das Verfahren nach einem der Sätze 58 bis 80, wobei in Schritt (e) die Luftzirkulation im Bereich der Pflanzen auf einen Bereich von 0,05 bis 3,9 m/s, vorzugsweise 0,2 bis 1, 6 m/s, besonders bevorzugt von 0,4 bis 1,2 m/s eingestellt.
Satz 82: Das Verfahren nach einem der Sätze 58 bis 81, wobei in Schritt (e) die Temperatur der Luft während der Belichtungsphasen im Bereich von 21 bis 25 °C, vorzugsweise 21,5 bis 24,5 liegt.
Satz 83: Das Verfahren nach einem der Sätze 58 bis 82, wobei in Schritt (e) die Temperatur der Luft während der Dunkelphasen im Bereich von 17 bis 22 °C, vorzugsweise 17,5 bis 19,5 liegt.
Satz 84: Das Verfahren nach einem der Sätze 58 bis 83, wobei die Sämlinge bei Erreichen einer Zielgröße, vorzugsweise eines Wachstumsstadiums, in eine Kulturstation umgesetzt werden.
Satz 85: Das Verfahren nach Satz 84, wobei die Zielgröße, vorzugsweise das Wachstumsstadium, nach 2 bis 5 Wochen erreicht ist.
Satz 86: Das Verfahren nach Satz 84 oder 85, wobei die Kulturstation ein vertikales Regal-, Säulen oder Wandsystem ist, welches vorzugweise automatisiert bewässerbar, belüftbar und/oder belichtbar ist. Satz 87: Das Verfahren nach einem der Sätze 58 bis 86, wobei in Schritt (g) keine Belichtung der Pflanzen erfolgt.
Satz 88: Das Verfahren nach einem der Sätze 58 bis 87, wobei in Schritt (g) eine Belichtung der Pflanzen erfolgt, vorzugsweise mit LED-Licht; bevorzugt erfolgt eine Dunkelphase, wenn die Pflanzen nicht belichtet werden.
Satz 89: Das Verfahren nach Satz 88, wobei in Schritt (g) die Belichtung der Pflanzen mit Licht bei einer Wellenlänge von 380 bis 780 nm erfolgt.
Satz 90: Das Verfahren nach Satz 88 oder 89, wobei in Schritt (g) die Belichtung der Pflanzen mit rotem LED-Licht bei einer Wellenlänge von 660 bis 730 nm und/oder blauem LED-Licht bei einer Wellenlänge von 437 bis 450 nm erfolgt.
Satz 91: Das Verfahren nach einem der Sätze 88 bis 90, wobei in Schritt (g) die Belichtung der Pflanzen mit rotem LED-Licht bei einer Wellenlänge von 660 bis 730 nm und bei blauem LED-Licht bei einer Wellenlänge von 437 bis 450 nm erfolgt, im Verhältnis von 5:1 bis 1:1, vorzugsweise bei einem Verhältnis von 5:1 oder 1:1.
Satz 92: Das Verfahren nach einem der Sätze 88 bis 91, wobei in Schritt (g) die Pflanzen für eine Dauer von 10 bis 24 Stunden pro Tag, vorzugsweise von 12 bis 20 Stunden pro Tag, besonders bevorzugt 16 bis 18 Stunden pro Tag belichtet werden.
Satz 93: Das Verfahren nach einem der Sätze 88 bis 92, wobei in Schritt (g) die Dauer der Belichtung von physiologischen Wachstumsparametern der Pflanze abhängt.
Satz 94: Das Verfahren nach Satz 93, wobei in Schritt (g) die Pflanzen für 12 bis 18 Stunden pro Tag belichtet werden, um eine Blütenbildung zu erreichen, vorzugsweise 14 bis 16 Stunden.
Satz 95: Das Verfahren nach Satz 93, wobei in Schritt (g) die Pflanzen für 10 bis 14 Stunden pro Tag belichtet werden, um eine Blütenbildung zu erreichen, vorzugsweise 11 bis 13 Stunden.
Satz 96: Das Verfahren nach Satz 93, wobei in Schritt (g) die Pflanzen für 10 bis 16 Stunden pro Tag belichtet werden, um weiteres Wachstum zu erreichen, vorzugsweise 12 bis 14 Stunden.
Satz 97: Das Verfahren nach Satz 93, wobei in Schritt (g) die Pflanzen für 10 bis 12 Stunden pro Tag belichtet werden, um weiteres Wachstum zu erreichen, vorzugsweise 10 bis 11 Stunden.
Satz 98: Das Verfahren nach einem der Sätze 58 bis 97, wobei in Schritt (g) die Pflanzen mit der Nährstofflösung gemäß einem der Sätze 42 bis 46 in Kontakt gebracht werden.
Satz 99: Das Verfahren nach Satz 98, wobei in Schritt (g) zur Herstellung der Nährstofflösung Wasser der gleichen Zusammensetzung verwendet wird, wie in Schritt (d).
Satz 100: Das Verfahren nach Satz 98 oder 99, wobei die Nährstofflösung eine Gesamtnährstoffkonzentration im Bereich von 600 bis 2500 ppm, vorzugsweise 1200 bis 1900 ppm aufweist.
Satz 101: Das Verfahren nach einem der Sätze 98 bis 100, wobei in Schritt (g) mit der Nährstofflösung während der Belichtung der Pflanzen bewässert wird, gefolgt von einer Unterbrechung der Bewässerung.
Satz 102: Das Verfahren nach einem der Sätze 98 bis 101, wobei die Bewässerung über die Wurzeln erfolgt.
Satz 103: Das Verfahren nach einem der Sätze 98 bis 102, wobei die Dauer der Bewässerung während der Belichtung für einen Zeitraum von 3 bis 10 Minuten, vorzugsweise 4 bis 9 Minuten, besonders bevorzugt 5 bis 8 Minuten und ganz besonders bevorzugt 5 bis 6 Minuten erfolgt.
Satz 104: Das Verfahren nach einem der Sätze 98 bis 103, wobei nach der Bewässerung während der Belichtung eine Unterbrechung von 40 bis 95 Minuten, vorzugsweise 45 bis 90 Minuten, besonders bevorzugt 50 bis 85 Minuten erfolgt.
Satz 105: Das Verfahren nach einem der Sätze 98 bis 104, wobei während der Dunkelphase gewässert wird, gefolgt von einer Unterbrechung der Bewässerung, wobei die Dauer der Unterbrechung länger ist als die Dauer der Bewässerung.
Satz 106: Das Verfahren nach einem der Sätze 98 bis 105, wobei die Dauer der Bewässerung während der Dunkelphase für einen Zeitraum von 3 bis 10 Minuten, vorzugsweise 4 bis 9 Minuten, besonders bevorzugt 5 bis 8 Minuten und ganz besonders bevorzugt 5 bis 6 Minuten erfolgt.
Satz 107: Das Verfahren nach einem der Sätze 98 bis 106, wobei nach der Bewässerung während der Dunkelphase eine Unterbrechung von 200 bis 400 Minuten, vorzugsweise 250 bis 350 Minuten, besonders bevorzugt 280 bis 320 Minuten erfolgt.
Satz 108: Das Verfahren nach einem der Sätze 98 bis 107, wobei die Steuerung der Bewässerung während der Belichtungsphase und/oder während der Dunkelphase in Abhängigkeit von der Bestimmung des Welkepunktes der Pflanze erfolgt.
Satz 109: Das Verfahren nach einem der Sätze 98 bis 108, wobei die Temperatur der Nährstofflösung im Bereich von 12 bis 28°C, vorzugsweise von 17,5 bis 19,5°C liegt.
Satz 110: Das Verfahren nach einem der Sätze 58 bis 109, wobei in Schritt (g) die relative Luftfeuchte 50 bis 80%, vorzugsweise 60 bis 70% beträgt.
Satz 111: Das Verfahren nach einem der Sätze 58 bis 110, wobei in Schritt (g) die relative Luftfeuchte während der Belichtung der Pflanzen 55 bis 80%, vorzugsweise 60-78%, beträgt.
Satz 112: Das Verfahren nach einem der Sätze 58 bis 111, wobei in Schritt (g) die relative Luftfeuchte während der Dunkelphase 55-75%, vorzugsweise 57-71%, beträgt.
Satz 113: Das Verfahren nach einem der Sätze 58 bis 112, wobei in Schritt (g) die Luftzirkulation im Bereich der Pflanzen auf einen Bereich von 0,05 bis 3,9 m/s, vorzugsweise 0,2 bis 1, 6 m/s, besonders bevorzugt von 0,4 bis 1,2 m/s eingestellt
Satz 114: Das Verfahren nach einem der Sätze 58 bis 113, wobei in Schritt (g) die Temperatur der Luft während der Belichtungsphasen im Bereich von 21 bis 25 °C, vorzugsweise 22,5 bis 24,5 liegt.
Satz 115: Das Verfahren nach einem der Sätze 58 bis 114, wobei in Schritt (g) die Temperatur der Luft während der Dunkelphasen im Bereich von 18 bis 22 °C, vorzugsweise 18,5 bis 20,5 liegt.
Satz 116: Das Verfahren nach einem der Sätze 58 bis 115, wobei in Schritt (g) der CO₂-Gehalt während der Belichtungsphasen reguliert wird, vorzugsweise auf einen Gehalt von mindestens 400 ppm.
Satz 117: Das Verfahren nach Satz 116, wobei der COz Gehalt auf einen Bereich von 700 bis 1400 ppm, vorzugsweise 800 bis 1300 ppm, besonders bevorzugt von 900 bis 1200 ppm eingestellt wird. Satz 118: Das Verfahren nach einem der Sätze 58 bis 117, wobei die Dauer von der Aussaat bis zur ersten Teilernte oder der Kompletternte der Pflanze wenigstens 14 Tage, vorzugsweise wenigstens 18 Tage, besonders bevorzugt wenigstens 30 Tage, und insbesondere wenigstens 32 Tage dauert.
Satz 119: Das Verfahren nach einem der Sätze 58 bis 118, wobei Wasserwechsel und/oder Reinigungsarbeiten an wasserführenden Elementen, insbesondere Nährstofftanks, vorgenommen werden, die während des Verfahrens zum Einsatz kommen, vorzugsweise wobei Salzablagerungen gelöst werden. Satz 120: Das Verfahren nach Satz 119, wobei zur Reinigung eine Reinigungslösung verwendet wird, vorzugsweise eine pflanzenverträgliche und lebensmittelechte Reinigungslösung.
Satz 121: Das Verfahren nach Satz 119 oder 120, wobei in regelmäßigen Zeitabständen, vorzugsweise in Abständen von 3 bis 12 Wochen, vorzugsweise von 4 bis 5 Wochen, eine vollständige Entleerung und Reinigung der Nährstofflösungstanks erfolgt.
Satz 122: Das Verfahren nach einem der Sätze 119 bis 121, wobei nach Entleerung der Tanks Schlamm und trockene Ablagerung, insbesondere Salzablagerungen, entfernt werden.
Satz 123: Das Verfahren nach einem der Sätze 119 bis 122, wobei keimabtötende und/oder oxidierende Mittel zur Reinigung der inneren Flächen der Nährstofftanks eingesetzt werden.
Satz 124: Das Verfahren nach Satz 123, wobei das Mittel Wasserstoffperoxid oder Ethanol enthält.

Die nachfolgenden Beispiele dienen zur Erläuterung der Erfindung, sind jedoch nicht einschränkend auszulegen.

### Beispiel 1:

Es wurde eine flüssige Nährstoffkombination zur erdelosen Kultur von Salat aus einem ersten Nährstoffkonzentrat A und einem zweiten Nährstoffkonzentrat B hergestellt. Das Verhältnis von A zu B beträgt 1 : 1. Die Zusammensetzung der Nährstoffkombination ist in der nachstehenden Tabelle aufgeführt:

| Molekül | Element | Faktor | Molekül [%] | | | Element [%] | | | normalisiert auf N |
|---|---|---|---|---|---|---|---|---|---|
| | | | in A | in B | Gesamt | in A | in B | Gesamt | |
| NO₃ | N | 0,2259 | 2,9 | 1,3 | 4,2 | 0,6551 | 0,2937 | 0,9488 | 1 |
| P₂O₅ | P | 0,4364 | 0 | 2,1 | 2,1 | 0 | 0,9165 | 0,9165 | 0,966 |
| K₂O | K | 0,8302 | 0 | 8,8 | 8,8 | 0 | 7,3053 | 7,3053 | 7,6995 |
| SO₃ | S | 0,4005 | 0 | 3,2 | 3,2 | 0 | 1,2815 | 1,2815 | 1,3506 |
| B | B | 1,0000 | 0 | 0,0085 | 0,0085 | 0 | 0,0085 | 0,0085 | 0,009 |
| Mo | Mo | 1,0000 | 0 | 0,0019 | 0,0019 | 0 | 0,0019 | 0,0019 | 0,002 |
| CaO | Ca | 0,7147 | 5,1 | 0 | 5,1 | 3,6449 | 0 | 3,6449 | 3,8416 |
| MgO | Mg | 0,6030 | 0,8 | 0 | 0,8 | 0,4824 | 0 | 0,4824 | 0,5085 |
| Cu | Cu | 1,0000 | 0,0013 | 0 | 0,0013 | 0,0013 | 0 | 0,0013 | 0,0014 |
| Fe | Fe | 1,0000 | 0,0447 | 0 | 0,0447 | 0,0447 | 0 | 0,0447 | 0,0471 |
| Mn | Mn | 1,0000 | 0,0078 | 0 | 0,0078 | 0,0078 | 0 | 0,0078 | 0,0082 |
| Zn | Zn | 1,0000 | 0,0093 | 0 | 0,0093 | 0,0093 | 0 | 0,0093 | 0,0098 |

### Beispiel 2:

Es wurde eine flüssige Nährstoffkombination zur erdelosen Kultur von Salat aus einem ersten Nährstoffkonzentrat A und einem zweiten Nährstoffkonzentrat B hergestellt. Das Verhältnis von A zu B beträgt 2 : 1. Die Zusammensetzung der Nährstoffkombination ist in der nachstehenden Tabelle aufgeführt:

| Molekül | Element | Faktor | Molekül [%] | | | Element [%] | | | normalisiert auf N |
|---|---|---|---|---|---|---|---|---|---|
| | | | in A | in B | Gesamt | in A | in B | Gesamt | |
| NO₃ | N | 0,2259 | 2,9 | 1,3 | 7,1 | 1,3102 | 0,2937 | 1,6039 | 1,0000 |
| P₂O₅ | P | 0,4364 | 0 | 2,1 | 2,1 | 0 | 0,9165 | 0,9165 | 0,5714 |
| K₂O | K | 0,8302 | 0 | 8,8 | 8,8 | 0 | 7,3053 | 7,3053 | 4,5547 |
| SO₃ | S | 0,4005 | 0 | 3,2 | 3,2 | 0 | 1,2815 | 1,2815 | 0,7990 |
| B | B | 1,0000 | 0 | 0,0085 | 0,0085 | 0 | 0,0085 | 0,0085 | 0,0053 |
| Mo | Mo | 1,0000 | 0 | 0,0019 | 0,0019 | 0 | 0,0019 | 0,0019 | 0,0012 |
| CaO | Ca | 0,7147 | 5,1 | 0 | 10,2 | 7,2899 | 0 | 7,2899 | 4,5450 |
| MgO | Mg | 0,6030 | 0,8 | 0 | 1,6 | 0,9649 | 0 | 0,9649 | 0,6016 |
| Cu | Cu | 1,0000 | 0,0013 | 0 | 0,0026 | 0,0026 | 0 | 0,0026 | 0,0016 |
| Fe | Fe | 1,0000 | 0,0447 | 0 | 0,0894 | 0,0894 | 0 | 0,0894 | 0,0557 |
| Mn | Mn | 1,0000 | 0,0078 | 0 | 0,0156 | 0,0156 | 0 | 0,0156 | 0,0097 |
| Zn | Zn | 1,0000 | 0,0093 | 0 | 0,0186 | 0,0186 | 0 | 0,0186 | 0,0116 |

### Beispiel 3:

Es wurde eine flüssige Nährstoffkombination zur erdelosen Kultur von Salat aus einem ersten Nährstoffkonzentrat A und einem zweiten Nährstoffkonzentrat B hergestellt. Das Verhältnis von A zu B beträgt 1 : 1. Die Zusammensetzung der Nährstoffkombination ist in der nachstehenden Tabelle aufgeführt:

| Molekül | Element | Faktor | Molekül [%] | | | | Element [%] | | | normalisiert auf N |
|---|---|---|---|---|---|---|---|---|---|---|
| | | | in A | in B | Gesamt | ppm | in A | in B | Gesamt | |
| NO₃ | N | 0,2259 | 5,8 | 1,3 | 7,1 | 71000 | 1,3102 | 0,2937 | 16,039 | 1,0000 |
| P₂O₅ | P | 0,4364 | 0 | 2,1 | 2,1 | 21000 | 0 | 0,9165 | 0,9165 | 0,5714 |
| K₂O | K | 0,8302 | 0 | 8,8 | 8,8 | 88000 | 0 | 7,3053 | 73,053 | 4,5547 |
| SO₃ | S | 0,4005 | 0 | 3,2 | 3,2 | 32000 | 0 | 1,2815 | 12,815 | 0,7990 |
| B | B | 1,0000 | 0 | 0,0085 | 0,0085 | 85 | 0 | 0,0085 | 0,0085 | 0,0053 |
| Mo | Mo | 1,0000 | 0 | 0,0019 | 0,0019 | 19 | 0 | 0,0019 | 0,0019 | 0,0012 |
| CaO | Ca | 0,7147 | 7 | 0 | 7 | 70000 | 5,0029 | 0 | 50,029 | 3,1191 |
| MgO | Mg | 0,6030 | 1,6 | 0 | 1,6 | 16000 | 0,9649 | 0 | 0,9649 | 0,6016 |
| Cu | Cu | 1,0000 | 0,0017 | 0 | 0,0017 | 17 | 0,0017 | 0 | 0,0017 | 0,0011 |
| Fe | Fe | 1,0000 | 0,07 | 0 | 0,07 | 700 | 0,0700 | 0 | 0,0700 | 0,0436 |
| Mn | Mn | 1,0000 | 0,016 | 0 | 0,016 | 160 | 0,0160 | 0 | 0,0160 | 0,0100 |
| Zn | Zn | 1,0000 | 0,018 | 0 | 0,018 | 180 | 0,0180 | 0 | 0,0180 | 0,0112 |

### Beispiel 4:

Es wurde eine flüssige Nährstoffkombination zur erdelosen Kultur von Salat aus einem ersten Nährstoffkonzentrat A und einem zweiten Nährstoffkonzentrat B hergestellt. Das Verhältnis von A zu B beträgt 1 : 1. Die Zusammensetzung der Nährstoffkombination ist in der nachstehenden Tabelle aufgeführt:

| Molekül | Element | Faktor | Molekül [%] | | | Element [%] | | | normalisiert auf N |
|---|---|---|---|---|---|---|---|---|---|
| | | | in A | in B | Gesamt | in A | in B | Gesamt | |
| NO₃ | N | 0,2259 | 5,3 | 0 | 5,3 | 1,1973 | 0 | 1,1973 | 1,0000 |
| P₂O₅ | P | 0,4364 | 0 | 1,25 | 1,25 | 0 | 0,5455 | 0,5455 | 0,5714 |
| K₂O | K | 0,8302 | 0 | 6,16 | 6,16 | 0 | 5,1137 | 5,1137 | 4,5547 |
| SO₃ | S | 0,4005 | 0 | 3 | 3 | 0 | 1,2014 | 1,2014 | 0,7990 |
| B | B | 1,0000 | 0 | 0,0085 | 0,0085 | 0 | 0,0085 | 0,0085 | 0,0053 |
| Mo | Mo | 1,0000 | 0 | 0,0019 | 0,0019 | 0 | 0,0019 | 0,0019 | 0,0012 |
| CaO | Ca | 0,7147 | 7 | 0 | 7 | 5,0029 | 0 | 5,0029 | 3,1191 |
| MgO | Mg | 0,6030 | 1,6 | 0 | 1,6 | 0,9649 | 0 | 0,9649 | 0,6016 |
| Cu | Cu | 1,0000 | 0,0017 | 0 | 0,0017 | 0,0017 | 0 | 0,0017 | 0,0011 |
| Fe | Fe | 1,0000 | 0,07 | 0 | 0,07 | 0,0700 | 0 | 0,0700 | 0,0436 |
| Mn | Mn | 1,0000 | 0,016 | 0 | 0,016 | 0,0160 | 0 | 0,0160 | 0,0100 |
| Zn | Zn | 1,0000 | 0,018 | 0 | 0,018 | 0,0180 | 0 | 0,0180 | 0,0112 |

### Beispiel 5:

Es wurde eine flüssige Nährstoffkombination zur erdelosen Kultur von Salat aus einem ersten Nährstoffkonzentrat A und einem zweiten Nährstoffkonzentrat B hergestellt. Das Verhältnis von A zu B beträgt 1 : 1. Die Zusammensetzung der Nährstoffkombination ist in der nachstehenden Tabelle aufgeführt:

| Molekül | Element | Faktor | Molekül [%] | | | Element [%] | | | normalisiert auf N |
|---|---|---|---|---|---|---|---|---|---|
| | | | in A | in B | Gesamt | in A | in B | Gesamt | |
| NO₃ | N | 0,2259 | 4,75 | 0,36 | 5,11 | 1,0730 | 0,0813 | 1,1544 | 1,0000 |
| NH₄ | N | 0,7764 | 0,18 | 0 | 0,18 | 0,1398 | 0 | 0,1398 | |
| P₂O₅ | P | 0,4364 | 0 | 1,26 | 1,26 | 0 | 0,5499 | 0,5499 | 0,4249 |
| K₂O | K | 0,8302 | 0 | 6,16 | 6,16 | 0 | 5,1137 | 5,1137 | 3,9515 |
| SO₃ | S | 0,4005 | 0 | 3,02 | 3,02 | 0 | 1,2094 | 1,2094 | 0,9345 |
| B | B | 1,0000 | 0 | 0,0085 | 0,0085 | 0 | 0,0085 | 0,0085 | 0,0066 |
| Mo | Mo | 1,0000 | 0 | 0,0019 | 0,0019 | 0 | 0,0019 | 0,0019 | 0,0015 |
| CaO | Ca | 0,7147 | 7,01 | 0 | 7,01 | 5,0100 | 0 | 5,0100 | 38,713 |
| MgO | Mg | 0,6030 | 1,6 | 0 | 1,6 | 0,9649 | 0 | 0,9649 | 0,7456 |
| Cu | Cu | 1,0000 | 0,0017 | 0 | 0,0017 | 0,0017 | 0 | 0,0017 | 0,0013 |
| Fe | Fe | 1,0000 | 0,07 | 0 | 0,07 | 0,0700 | 0 | 0,0700 | 0,0541 |
| Mn | Mn | 1,0000 | 0,016 | 0 | 0,016 | 0,0160 | 0 | 0,0160 | 0,0124 |
| Zn | Zn | 1,0000 | 0,018 | 0 | 0,018 | 0,0180 | 0 | 0,0180 | 0,0139 |

### Beispiel 6:

Es wurde eine feste Nährstoffkombination zur erdelosen Kultur von Salat aus einem ersten Nährstoffkonzentrat A und einem zweiten Nährstoffkonzentrat B hergestellt. Das Verhältnis von A zu B beträgt 1 : 1. Die Zusammensetzung der Nährstoffkombination ist in der nachstehenden Tabelle aufgeführt:

| Molekül | Element | Faktor | Molekül [%] | | | Element [%] (verdünnt in Wasser) | | | normalisiert auf N |
|---|---|---|---|---|---|---|---|---|---|
| | | | in A | in B | Gesamt | in A | in B | Gesamt | |
| NO₃ | N | 0,2259 | 0 | 0 | 0 | 1,1521 | | 5,1 | 1,0000 |
| NH₄ | N | 0,7764 | 0 | 0 | 0 | 0,1941 | | 0,25 | |
| CaH₄N₄O₉ | N | 0,2295 | 100 | 0 | 100 | | | | |
| P₂O₅ | P | 0,4364 | 0 | 11,704 | 11,704 | | 0,6546 | 1,5 | 0,4863 |
| K₂O | K | 0,8302 | 0 | 48,377 | 48,377 | | 5,1469 | 6,2 | 3,8232 |
| SO₃ | S | 0,4005 | 0 | 26,529 | 26,529 | | 1,3616 | 3,4 | 1,0114 |
| B | B | 1,0000 | 0 | 0,066 | 0,066 | | 0,0085 | 0,0085 | 0,0063 |
| Mo | Mo | 1,0000 | 0 | 0,015 | 0,015 | | 0,0019 | 0,0019 | 0,0014 |
| CaH₄N₄O₉ | Ca | 0,7147 | 0 | | | 4,5741 | | 6,4 | 3,3977 |
| MgO | Mg | 0,6030 | 0 | 12,484 | 12,484 | | 0,9649 | 1,6 | 0,7167 |
| Cu | Cu | 1,0000 | 0 | 0,013 | 0,013 | | 0,0017 | 0,0017 | 0,0013 |
| Fe | Fe | 1,0000 | 0 | 0,546 | 0,546 | | 0,0700 | 0,07 | 0,0520 |
| Mn | Mn | 1,0000 | 0 | 0,125 | 0,125 | | 0,0160 | 0,016 | 0,0119 |
| Zn | Zn | 1,0000 | 0 | 0,140 | 0,140 | | 0,0180 | 0,018 | 0,0134 |

## Patentansprüche

1. Eine Nährstoffkombination für die erdelose Kultur von Pflanzen, insbesondere bei vertikaler Landwirtschaft über wenigstens zwei Ebenen, vorzugsweise wenigstens drei Ebenen, umfassend zumindest:
- Stickstoff, in einer Menge im Bereich von 0,001 bis 15 Gew.-%;
- Phosphor, in einer Menge im Bereich von 0,01 bis 6,0 Gew.-%;
- Kalium, in einer Menge im Bereich von 1,0 bis 30 Gew.-%;
- Schwefel, in einer Menge im Bereich von 0,1 bis 10 Gew.-%;
- Calcium, in einer Menge im Bereich von 0,4 bis 10 Gew.-%;
- Magnesium, in einer Menge im Bereich von 0,04 bis 5,0 Gew.-%;
- Bor, in einer Menge im Bereich von 0,001 bis 0,05 Gew.-%;
- Molybdän, in einer Menge im Bereich von 0,0005 bis 0,05 Gew.-%;
- Kupfer, in einer Menge im Bereich von 0,0005 bis 0,05 Gew.-%;
- Mangan, in einer Menge im Bereich von 0,001 bis 0,1 Gew.-%;
- Eisen, in einer Menge im Bereich von 0,001 bis 1,0 Gew.-%; und
- Zink, in einer Menge im Bereich von 0,001 bis 0,4 Gew.-%;
jeweils bezogen auf das Gesamtgewicht der Nährstoffkombination,
ggfs. Mikroorganismen und/oder Mikroben-basierte Präparate, ausgewählt aus der Gruppe bestehend aus *Arthrobacter globiformis, Azospilrillum brasilense, Azospilrillum lipoferum, Azotobacter chroococcum, Azotobacter paspali, Azotobacter vinelandii, Bacillus amyloliquefaciens, Bacillus atrophaeus, Bacillus licheniformis, Bacillus megaterium, Bacillus pumilus, Bacillus subtilis, Bacillus thuringiensis, Bififobacterium animalis, Bififobacterium lactis, Bififobacterium longum, Brevibacillus brevis, Cellulomonas fimi,Lactobacillus acidophilus, Lactobacillus casei, Lactobacillus lactis, Lactobacillus plantarum, Lactobacillus rhamnosus, Lactococcus lactis, Leuconostoc pseudomesenteorides, Micrococcus luteus, Phanerochaete chrysosporium, Pseudomonas aeruginosa, Pseudomonas argentinensis, Pseudomonas azotoformans, Pseudomonas chlororaphis, Pseudomonas flourescens, Pseudomonas fulva, Pseudomonas nitroreducens, Pseudomonas poae, Pseudomonas putida, Pseudomonas stutzeri, Rhodopseudomonas palustris, Rhodospirillum rubrum, Saccharomyces cervisiae, Streptococcus thermophilus, Streptomyces griseus,* und *Thrichoderma reesei;* und
ggfs. Fermente ausgewählt aus Algen, Kompost, Melasse und Mungbohnen;
wobei das Verhältnis von Stickstoff zu Kalium mindestens 1,0 : 2,0 beträgt.

2. Die Nährstoffkombination nach Anspruch 1, wobei das Verhältnis von Stickstoff zu Phosphor zu Kalium (N : P : K) im Bereich von 1,0 : 0,1 : 1,5 bis 1,0 : 1,0 : 8,0 liegt, bevorzugt von 1,0 : 0,2 : 2,5 bis 1,0 : 0,7 : 6,0, bevorzugter von 1,0 : 0,3 : 3,5 bis 1,0 : 0,5 : 4,5.

3. Die Nährstoffkombination nach Anspruch 1 oder 2, welche fest ist, vorzugsweise ein Pulver.

4. Die Nährstoffkombination nach Anspruch 1 oder 2, welche flüssig ist.

5. Die Nährstoffkombination nach Anspruch 4, welche
- Stickstoff, in einer Menge im Bereich von 0,001 bis 10 g;
- Phosphor, in einer Menge im Bereich von 0,01 bis 6,0 g;
- Kalium, in einer Menge im Bereich von 1,0 bis 10 g;
- Schwefel, in einer Menge im Bereich von 0,1 bis 6,0 g;
- Calcium, in einer Menge im Bereich von 0,4 bis 10 g;
- Magnesium, in einer Menge im Bereich von 0,04 bis 5,0 g;
- Bor, in einer Menge im Bereich von 0,001 bis 0,05 g;
- Molybdän, in einer Menge im Bereich von 0,0005 bis 0,05 g;
- Kupfer, in einer Menge im Bereich von 0,0005 bis 0,05 g;
- Mangan, in einer Menge im Bereich von 0,001 bis 0,1 g;
- Eisen, in einer Menge im Bereich von 0,001 bis 1,0 g; und
- Zink, in einer Menge im Bereich von 0,001 bis 0,4 g umfasst;
jeweils pro Liter der Nährstoffkombination.

6. Die Nährstoffkombination nach einem der vorstehenden Ansprüche, welche ein erstes Nährstoffkonzentrat A und ein zweites Nährstoffkonzentrat B umfasst.

7. Eine Nährstofflösung umfassend die Nährstoffkombination nach einem der vorstehenden Ansprüche und Wasser.

8. Die Nährstofflösung nach Anspruch 7, welche eine Gesamtnährstoffkonzentration im Bereich von 1 bis 2300 ppm aufweist.

9. Die Nährstofflösung nach Anspruch 7 oder 8, welche einen pH-Wert im Bereich von 4,0 bis 8,0 aufweist, bevorzugt von 5,0 bis 7,0, und bevorzugter von 5,6 bis 6,0.

10. Ein Verfahren für die erdelose Kultur von Pflanzen, insbesondere bei vertikaler Landwirtschaft über wenigstens zwei Ebenen, vorzugsweise wenigstens drei Ebenen, das Verfahren umfassend zumindest die Schritte:
(a) Bereitstellen von Stecklingen, Saatgut oder Pflanzgut;
(b) Bereitstellen von Substrat;
(c) Aussähen oder Stecken der gemäß Schritt (a) bereitgestellten Stecklinge, des Saatgutes oder des Pflanzgutes in das gemäß Schritt (b) bereitgestellte Substrat;
(d) Bereitstellen der Nährstofflösung gemäß einem der Ansprüche 7 bis 9;
(e) Aufziehen der gemäß Schritt (c) ausgesäten oder gesteckten Stecklinge, des Saatguts oder des Pflanzgutes zu Sämlingen, vorzugsweise bis zum Erreichen einer Zielgröße;
wobei Schritt (e) das Inkontaktbringen des gemäß Schritt (b) bereit gestellten Substrates und der gemäß Schritt (d) bereitgestellten Nährstofflösung umfasst;
(f) Ggf. umsetzen der gemäß Schritt (e) aufgezogenen Sämlinge; und
(g) Ggf. kultivieren der gemäß Schritt (e) aufgezogenen Sämlinge oder der gemäß Schritt (f) umgesetzten Sämlinge.

11. Das Verfahren nach Anspruch 10, wobei die Pflanzen ausgewählt sind aus der Gruppe bestehend aus Salaten, Kohlen, Kräutern, fruchttragendem Gemüse, insbesondere Gurke, Tomate oder Paprika, und blütenbildenden Kräutern.

12. Das Verfahren nach Anspruch 10 oder 11, wobei in Schritt (e) mit der Nährstofflösung bewässert wird, gefolgt von einer Unterbrechung der Bewässerung.

13. Das Verfahren nach einem der Ansprüche 10 bis 12, wobei in Schritt (g) mit der Nährstofflösung während der Belichtung der Pflanzen bewässert wird, gefolgt von einer Unterbrechung der Bewässerung.

14. Das Verfahren nach einem der Ansprüche 10 bis 13, wobei die Dauer von der Aussaat bis zur ersten Teilernte oder der Kompletternte der Pflanze wenigstens 14 Tage, vorzugsweise wenigstens 18 Tage, besonders bevorzugt wenigstens 30 Tage, und insbesondere wenigstens 32 Tage dauert.

15. Das Verfahren nach einem der Ansprüche 10 bis 14, wobei Wasserwechsel und/oder Reinigungsarbeiten an wasserführenden Elementen, insbesondere Nährstofftanks, vorgenommen werden, die während des Verfahrens zum Einsatz kommen, vorzugsweise wobei Salzablagerungen gelöst werden.
